# EUROPEAN PATENT APPLICATION

(11) **EP 4 848 481 A1**
(43) Date of publication of application: **02.12.2026**
(21) Application number: 25762341.3
(22) Date of filing: 21.02.2025
(51) Int. Cl.: H01Q 5/307, H01Q 3/36, H04B 1/00, H04B 7/06, H01P 1/18, H01Q 1/24, H01Q 5/335, G06F 3/01

(54) **ELECTRONIC DEVICE COMPRISING ANTENNA**

(30) Priority: 29.02.2024 KR 20240029507; 17.05.2024 KR 20240064568
(71) Applicant: Samsung Electronics Co., Ltd., Suwon-si, Gyeonggi-do 16677 (KR)
(72) Inventor: HWANG, Soonho, Suwon-si, Gyeonggi-do 16677 (KR); PARK, Sungkoo, Suwon-si, Gyeonggi-do 16677 (KR); JO, Jaehoon, Suwon-si, Gyeonggi-do 16677 (KR); NAM, Hojung, Suwon-si, Gyeonggi-do 16677 (KR); LEE, Kyungjae, Suwon-si, Gyeonggi-do 16677 (KR); LEE, Kookjoo, Suwon-si, Gyeonggi-do 16677 (KR); KIM, Seunghwan, Suwon-si, Gyeonggi-do 16677 (KR); CHUN, Jaebong, Suwon-si, Gyeonggi-do 16677 (KR)
(74) Representative: HGF
(86) International application number: PCT/KR2025/002454
(87) International publication number: WO 2025/183407

(57) **Abstract**

This electronic device comprises at least one wireless communication circuit, a distribution circuit, a plurality of antenna radiators, and a filtering circuit. The plurality of antenna radiators include: a first antenna radiator for transmitting a first signal on a first frequency band from the at least one wireless communication circuit; a second antenna radiator for transmitting a second signal on a second frequency band from the distribution circuit; and a third antenna radiator for transmitting the second signal or a third signal on a third frequency band from the at least one wireless communication circuit. The filtering circuit is electrically connected to the third antenna radiator. The filtering circuit is configured to transmit the second signal or the third signal on the third frequency band to the third antenna radiator.

## Description

### [Technical Field]

This disclosure relates to an electronic device including an antenna.

### [Background Art]

An electronic device may include antennas for communication with an external electronic device. An antenna may form a radiation pattern according to electric field strength by radiating electromagnetic waves. The antenna may be implemented as a portion of a housing of the electronic device. For example, the housing may include a plurality of conductive portions. A portion of the plurality of conductive portions may operate as an antenna radiator.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device is provided. The electronic device may include at least one wireless communication circuit. The electronic device may include divider circuitry connected to the at least one wireless communication circuit. The electronic device may include a plurality of antenna radiators. The plurality of antenna radiators may include a first antenna radiator to transmit a first signal on a first frequency band from the at least one wireless communication circuit, a second antenna radiator to transmit a second signal on a second frequency band at least partially overlapping the first frequency band from the divider circuitry, and a third antenna radiator to transmit the second signal on the second frequency band from the divider circuitry or a third signal on a third frequency band from the at least one wireless communication circuit. The electronic device may include filtering circuitry electrically connected to the third antenna radiator. The filtering circuitry may be configured to transmit, to the third antenna radiator, the second signal on the second frequency band from the divider circuitry, or the third signal on the third frequency band from the at least one wireless communication circuit.

### [Description of the Drawings]

FIG. 1 is a block diagram of an electronic device in a network environment according to an embodiment.
FIGS. 2A, 2B, and 2C are block diagrams of an electronic device according to an example embodiment.
FIG. 3 illustrates an electronic device according to an example embodiment.
FIG. 4A illustrates an electronic device and a peak direction of a radiation pattern according to an example embodiment.
FIG. 4B is a block diagram of an electronic device including a phase shifter according to an example embodiment.
FIG. 4C is a block diagram of an electronic device including matching circuitry according to an example embodiment.
FIG. 4D is a block diagram of an electronic device including a second transmission line different from a first transmission line according to an example embodiment.
FIG. 5 is a flowchart illustrating an operation in which an electronic device according to an example embodiment controls a phase difference based on a quality of a signal.
FIG. 6 is a flowchart illustrating an operation in which an electronic device according to an example embodiment controls a phase difference based on identification of a grip.
FIG. 7A illustrates a gain of antennas.
FIG. 7B illustrates an electronic device using a second antenna radiator.
FIG. 7C illustrates an electronic device using a second antenna radiator and a third antenna radiator together.
FIG. 8 illustrates a radiation pattern of each of a first antenna, a second antenna, and a third antenna.
FIGS. 9A, 9B, and 9C are diagrams illustrating a process in which an electronic device according to an example embodiment controls directivity.
FIGS. 10A, 10B, and 10C are block diagrams of an electronic device including a switch circuit according to an example embodiment.

### [Mode for Invention]

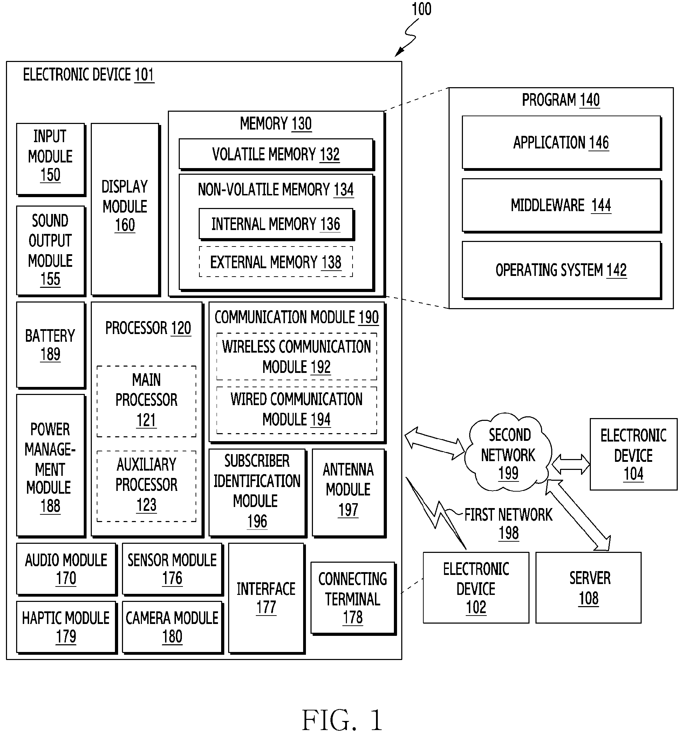

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

As an electronic device 101 is miniaturized, a space for disposing a plurality of antenna radiators in the electronic device 101 may be limited. As antenna radiators are disposed in a limited space, different antennas may be disposed adjacent to each other. When antennas are disposed closely, a peak direction and a shape of a radiation pattern formed by an antenna and a peak direction and a shape of a radiation pattern formed by another antenna may be substantially the same or similar. Since an envelope correlation coefficient (ECC) between radiation patterns may be increased when peak directions and shapes of radiation patterns are substantially the same or similar, it may be difficult for different antennas to transmit and/or receive various signals in an MIMO environment, and communication performance (e.g., throughput) of the electronic device 101 may be deteriorated.

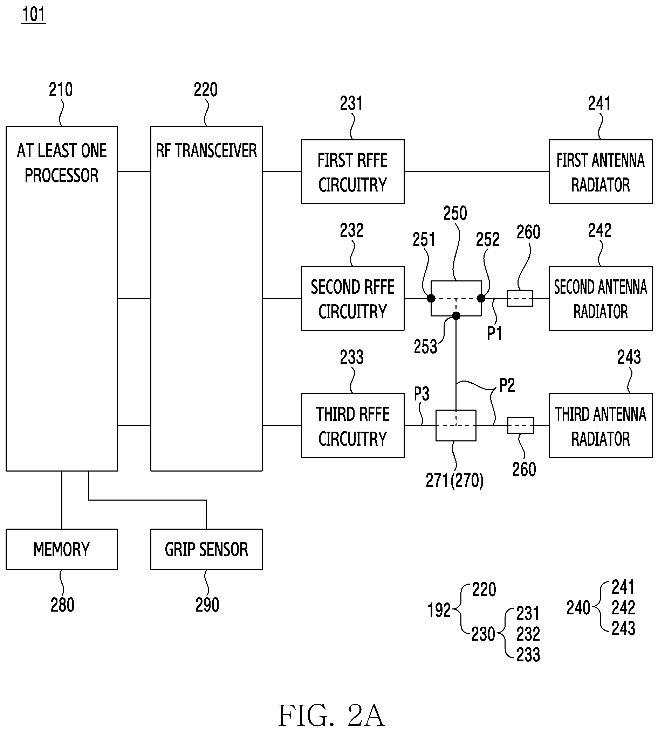

The electronic device 101 according to an example embodiment may be configured to control a phase of a signal to reduce ECC between radiation patterns. For example, while a first signal on a first frequency band is transmitted and/or received via a first antenna radiator (e.g., a first antenna radiator 241 of FIG. 2A), the electronic device 101 may perform an MIMO operation by transmitting and/or receiving a second signal on a second frequency band at least partially overlapping the first frequency band by using a second antenna radiator (e.g., a second antenna radiator 242 of FIG. 2A) and a third antenna radiator (e.g., a third antenna radiator 243 of FIG. 2A) as one antenna radiator. In order to transmit and/or receive a second signal on a frequency band at least partially overlapping a first signal transmitted and/or received via the first antenna radiator 241, the second antenna radiator 242 and the third antenna radiator 243 may be electrically connected via divider circuitry (e.g., divider circuitry 250 of FIG. 2A). The second signal may be transmitted to the second antenna radiator 242 and the third antenna radiator 243, via the divider circuitry 250.

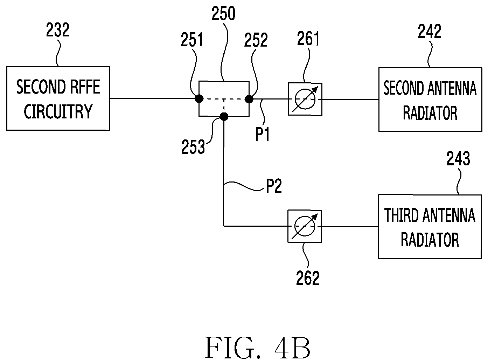

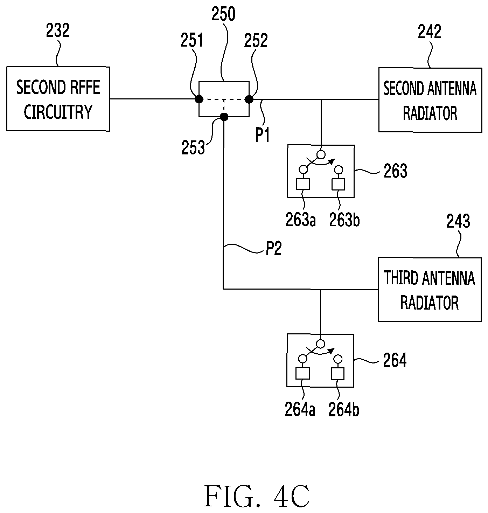

The electronic device 101 according to an example embodiment may be configured to form a difference between a first phase of a second signal provided to the second antenna radiator 242 and a second phase of the second signal provided to the third antenna radiator 243. For example, the electronic device 101 may include a phase control unit 260 for forming a difference between the first phase and the second phase. The phase control unit 260 may include an element such as a phase shifter (e.g., a first phase shifter 261 or a second phase shifter 262 of FIG. 4B) or matching circuitry (e.g., first matching circuitry 263 or second matching circuitry 264 of FIG. 4C), but is not limited thereto. For example, a difference between the first phase and the second phase may also be formed by controlling a length or a width of a transmission line for a signal provided to an antenna radiator. Via a difference between the first phase of the second signal provided to the second antenna radiator 242 and the second phase of the second signal provided to the third antenna radiator 243, a peak direction of a second radiation pattern formed from the second antenna radiator 242 and the third antenna radiator 243 may be controlled. As the peak direction of the second radiation pattern is formed differently from a peak direction of a first radiation pattern formed from the first antenna radiator 241, ECC between the first radiation pattern and the second radiation pattern may be reduced.

Hereinafter, the electronic device 101 according to an example embodiment is described.

The electronic device 101 according to an example embodiment may perform a multiple-input and multiple-output (MIMO) operation by using a plurality of antennas. The electronic device 101 may transmit a signal on a first frequency band to a base station or receive a signal on the first frequency band from the base station, by using the plurality of antennas. A data rate may be enhanced via MIMO.

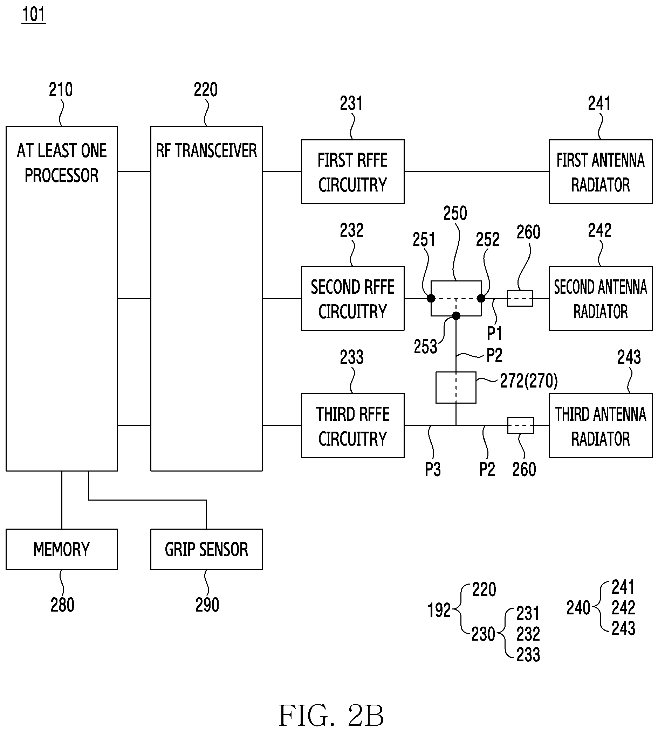

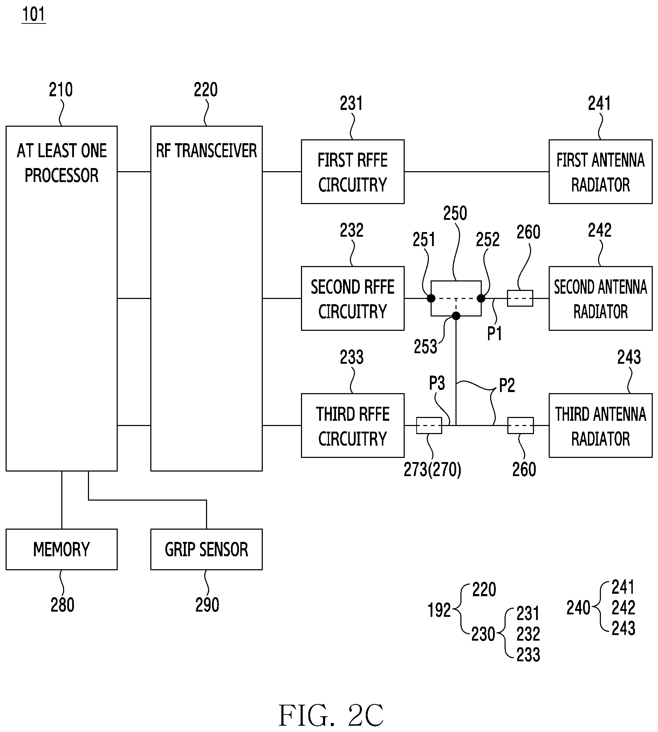

FIGS. 2A, 2B, and 2C are block diagrams of an electronic device according to an example embodiment.

Referring to FIG. 2A, an electronic device 101 according to an example embodiment may include at least one processor 210 (e.g., the processor 120 of FIG. 1), memory 280 (e.g., the memory 130 of FIG. 1), at least one wireless communication circuit (e.g., the wireless communication module 192 of FIG. 1), a plurality of antenna radiators 240, divider circuitry 250, and/or filtering circuitry 270. For example, the at least one wireless communication circuit 192 may include a radio frequency transceiver (RF transceiver) 220 and/or RF front end (RFFE) circuitries 230.

According to an example embodiment, the at least one processor 210 may include at least one of an application processor (AP) or a communication processor (CP). For example, the at least one processor 210 may generate a baseband signal. The at least one processor 210 may control the RF transceiver 220 to process the generated baseband signal. The at least one processor 210 may control the RF transceiver 220 such that a transmission signal is transmitted via an antenna radiator. The at least one processor 210 may control the RF transceiver 220 such that the transmission signal is transmitted on a frequency band capable of communicating with an external electronic device.

According to an example embodiment, the RF transceiver 220 may be implemented as a single chip (e.g., an RFIC chip) or a portion of a single package. The RF transceiver 220 may include a digital to analog converter (DAC) for converting a digital signal into an analog signal. The RF transceiver 220 may include a mixer and an oscillator (e.g., a local oscillator (LO)) for up-conversion. The RF transceiver 220 may convert a baseband signal generated by the at least one processor 210 into an RF signal. The RF transceiver 220 may include an analog to digital converter (ADC) for converting an analog signal into a digital signal. The RF transceiver 220 may include a mixer and an oscillator for down-conversion. The RF transceiver 220 may convert an RF signal received from each of the antenna radiators 240 into a baseband signal such that it may be processed by the at least one processor 210.

According to an example embodiment, the memory 280 may include one or more storage mediums storing instructions. Any function or operation described in the present specification may be processed by the at least one processor 210. The at least one processor 210 may include processing circuitry performing processing. As described above, the at least one processor 210 may include an application processor (AP) (e.g., a central processing unit (CPU)) and/or a communication processor (CP) (e.g., a modem), but is not limited thereto. The at least one processor 210 may include a graphics processing unit (e.g., a GPU), a neural processing unit (NPU) (e.g., an artificial intelligence (AI) chip), a wireless-fidelity (Wi-Fi) chip, a Bluetooth^{TM} chip, a global positioning system (GPS) chip, a near field communication (NFC) chip, connectivity chips, a sensor controller, a touch controller, a finger-print sensor controller, display drive integrated circuit (DDI), an audio CODEC chip, a universal serial bus (USB) controller, a camera controller, an image processing IC, a microprocessor unit (MPU), a system on chip (SoC), an IC, or circuitry similar thereto. It should be understood that a combination of a block of each flowchart and a flowchart in the present disclosure may be performed by one or more computer programs including computer-executable instructions. The entirety of the one or more computer programs may be stored in a single memory, or the one or more computer programs may be divided into different portions stored in different multiple memories.

According to an example embodiment, the RFFE circuitries 230 may include a plurality of components electrically connected between the RF transceiver 220 and the plurality of antenna radiators 240. For example, each of the RFFE circuitries 230 may include components such as a coupler, a power amplifier (PA), a low noise amplifier (LNA), a switch circuit, and/or a duplexer, but is not limited thereto.

According to an example embodiment, the RFFE circuitries 230 may be configured to communicate with an external electronic device by using a signal on a designated frequency band. For example, each of the plurality of antenna radiators 240 may be used to transmit and/or receive a signal on a designated frequency band. For example, the plurality of antenna radiators 240 may include a feeding point at which a feeding signal provided from the RF transceiver 220 is provided and/or a ground point electrically connected to a ground of the electronic device 101. The plurality of antenna radiators 240 are physical components for radiating or receiving an electromagnetic wave, and a form and characteristic (e.g., a frequency characteristic of an antenna) of an antenna may be determined by each of the antenna radiators 240. In FIG. 2A, the antenna radiators 240 are illustrated as including a first antenna radiator 241, a second antenna radiator 242, and a third antenna radiator 242, but an embodiment is not limited thereto. For example, the antenna radiators 240 may include four or more antenna radiators.

According to an example embodiment, the RFFE circuitries 230 may include first RFFE circuitry 231, second RFFE circuitry 232, and/or third RFFE circuitry 233.

According to an example embodiment, the first RFFE circuitry 231 may be electrically connected to the first antenna radiator 241. The first RFFE circuitry 231 may be used to transmit or receive a first signal on a first frequency band. For example, the first signal provided from the RF transceiver 220 may be provided to the first antenna radiator 241 via the first RFFE circuitry 231 and then may be radiated to an outside of the electronic device 101 via the first antenna radiator 241. According to an example embodiment, an antenna including the first antenna radiator 241 may be provided.

According to an example embodiment, the second RFFE circuitry 232 may be used to transmit or receive a second signal on a second frequency band at least partially overlapping the first frequency band. The second RFFE circuitry 232 may be electrically connected to the second antenna radiator 242 and the third antenna radiator 243. The second signal provided from the RF transceiver 220 may be provided to at least one of the second antenna radiator 242 and the third antenna radiator 243 via the second RFFE circuitry 232 and the divider circuitry 250 and then may be radiated to an outside of the electronic device 101 via the second antenna radiator 242 and the third antenna radiator 243. For example, a signal transmitted and/or received via the divider circuitry 250, the second RFFE circuitry 232, the second antenna radiator 242, and the third antenna radiator 243 may be referred to as the second signal.

According to an example embodiment, the third RFFE circuitry 233 may be used to transmit or receive a third signal on a third frequency band different from the first frequency band. The third RFFE circuitry 233 may be electrically connected to the third antenna radiator 243. The third signal provided from the RF transceiver 220 may be provided to the third antenna radiator 243 via the third RFFE circuitry 233 and then may be radiated to an outside of the electronic device 101 via the third antenna radiator 243. For example, the first frequency band may include a low band and a high band, the second frequency band may include a high band and an ultra-high band, and the third frequency band may include a mid band and a high band. For example, the first frequency band may include a band of about 1 GHz or higher, and the third frequency band may include a band of about 2 GHz or about 5 GHz except for the first frequency band. However, the above-described frequency bands are merely exemplary, and the embodiments are not limited thereto. According to an example embodiment, an antenna including the third antenna radiator 243 may be provided. According to an embodiment, the third antenna radiator 243 may be configured to transmit and/or receive a signal on the third frequency band.

According to an example embodiment, the divider circuitry 250 may be a three-port passive element. For example, three ports of the divider circuitry 250 may respectively provide an electrical transmission line having a characteristic impedance of 50 ohms. A signal inputted via the first port 251 (e.g., a transmission signal) may be divided to have equal power and outputted to each of the second port 252 and the third port 253. A signal inputted to the second port 252 and the third port 253 (e.g., a reception signal) may be combined into one signal and outputted to the first port 251. The divider circuitry 250 may be referred to as a power divider, a splitter, power branch circuitry, and/or a coupler.

According to an example embodiment, the divider circuitry 250 may electrically connect the second RFFE circuitry 232 to the second antenna radiator 242 and the third antenna radiator 243. For example, the first port 251 may be electrically connected to the second RFFE circuitry 232, the second port 252 may be electrically connected to the second antenna radiator 242, and the third port 253 may be electrically connected to the third antenna radiator 243. The second signal provided from the second RFFE circuitry 232 may be branched, via the divider circuitry 250, into the second signal provided to the second antenna radiator 242 and the second signal provided to the third antenna radiator 243. For example, the electronic device 101 may include a first transmission line P1 between the divider circuitry 250 and the second antenna radiator 242, a second transmission line P2 between the divider circuitry 250 and the third antenna radiator 243, and a third transmission line P3 extended from the third RFFE circuitry 233 and connected to the second transmission line P2. The second signal may be provided (or fed) to the second antenna radiator 242 along the first transmission line P1. The second signal may be provided (or fed) to the third antenna radiator 243 along the second transmission line P2. The second signal may be radiated to the outside via the second antenna radiator 242 and the third antenna radiator 243. According to an example embodiment, an antenna using the second antenna radiator 242 and/or the third antenna radiator 243 as a radiator may be provided.

According to an example embodiment, the electronic device 101 may include a phase control unit 260 to cause a difference between a first phase of the second signal provided from the divider circuitry 250 to the second antenna radiator 242 and a second phase of the second signal provided from the divider circuitry 250 to the third antenna radiator 243. The phase control unit 260 may be electrically connected to the second antenna radiator 242 and/or the third antenna radiator 243. For example, the phase control unit 260 may include a phase shifter configured to control a phase of a signal (e.g., a first phase shifter 261 or a second phase shifter 262 of FIG. 4B) or matching circuitry (e.g., first matching circuitry 263 or second matching circuitry 264 of FIG. 4C).

For example, the phase control unit 260 may include at least one of the first phase shifter 261 and/or the second phase shifter 262. The first phase shifter 261 may be disposed between the divider circuitry 250 and the second antenna radiator 242. For example, the first phase shifter 261 may be disposed on the first transmission line P1. The second phase shifter 262 may be disposed between the divider circuitry 250 and the second antenna radiator 242. For example, the second phase shifter 262 may be disposed on the second transmission line P2.

According to an example embodiment, the first phase shifter 261 and/or the second phase shifter 262 may cause a difference between the first phase of the second signal transmitted to the second antenna radiator 242 and the second phase of the second signal transmitted to the third antenna radiator 243. The first phase and the second phase may be different from each other by the first phase shifter 261 and/or the second phase shifter 262. For example, a difference between the first phase and the second phase may be between about 0 degrees and 270 degrees. For example, the difference between the first phase and the second phase may be about 45 degrees with respect to a high band, but is not limited thereto.

According to an example embodiment, the first phase shifter 261 and/or the second phase shifter 262 may include a passive element (e.g., an inductor and/or a capacitor). The phase shifters 261 and 262 may convert a phase of a signal outputted from the first phase shifter 261 and/or the second phase shifter 262 by delaying a phase of a signal inputted to the phase shifters 261 and 262. For example, the second signal provided from the second RFFE circuitry 232 to the power divider 250 may be branched, by the power divider 250, into the second signal provided to the first transmission line P1 and the second signal provided to the second transmission line P2. The second signal provided to the second antenna radiator 242 may pass through the first phase shifter 261 disposed on the first transmission line P1, and the second signal provided to the third antenna radiator 243 may pass through the second phase shifter 262 disposed on the second transmission line P2. The second signal may have a first phase and/or a second phase shifted by the first phase shifter 261 and/or the second phase shifter 262. However, it is not limited thereto. For example, the phase control unit 260 may also include matching circuitry including at least one passive element. For example, a difference between the first phase and the second phase may also be caused by a first length or a first width of the first transmission line P1 and a second length or a second width of the second transmission line P2.

According to an example embodiment, when the second signal is radiated via the second antenna radiator 242 and the third antenna radiator 243, a peak direction of a radiation pattern may be determined based on a difference between the first phase and the second phase. The difference between the first phase and the second phase may affect a peak direction of a radiation pattern formed from the second antenna radiator 242 and the third antenna radiator 243, when the second signal is transmitted and/or received. The at least one processor 210 may be configured to transmit and/or receive the second signal on the second frequency band via the second antenna radiator 242 and the third antenna radiator 243 while the first signal on the first frequency band is transmitted and/or received via the first antenna radiator 241 in order to perform a MIMO operation. The peak direction of the radiation pattern according to the second signal may be controlled based on the difference between the first phase and the second phase. According to an example embodiment, as the peak direction of the radiation pattern according to the second signal is controlled, an ECC between a radiation pattern according to the second signal and a radiation pattern according to the first signal may be reduced. According to an example embodiment, as the ECC is reduced, interference between the first signal and the second signal may be reduced, and communication performance of the electronic device 101 may be improved.

As described above, independently of the second antenna radiator 242, the third antenna radiator 243 may operate as a portion of another antenna to transmit and/or receive the third signal on the third frequency band. According to an example embodiment, the third antenna radiator 243 capable of operating as a portion of another antenna may be used together with the second antenna radiator 242 to transmit and/or receive the second signal. Since the third antenna radiator 243 is electrically connected with the third RFFE circuitry 233 to transmit and/or receive the third signal, the second signal or the third signal may interfere with each other in a transmission line connected with the third antenna radiator 243 (e.g., the second transmission line P2 and/or the third transmission line P3). The interference may be a problem caused by using the third antenna radiator 243 for another antenna together with the second antenna radiator 242 to control the peak direction of the radiation pattern according to the second signal. As the third antenna radiator 243 is used together with the second antenna radiator 242, the electronic device 101 may include filtering circuitry 270 to resolve interference between the second signal and the third signal.

The electronic device 101 according to an example embodiment may include the filtering circuitry 270. The filtering circuitry 270 may be electrically connected to the third antenna radiator 243. The filtering circuitry 270 may be configured to transmit the second signal from the divider circuitry 250 to the third antenna radiator 243 or transmit the third signal from the third RFFE circuitry 233 to the third antenna radiator 243, according to an operation of the electronic device 101. For example, when the at least one processor 210 performs an operation of transmitting the second signal, the filtering circuitry 270 may transmit the second signal provided via the second RFFE circuitry 232 and the divider circuitry 250 to the third antenna radiator 243, and when the at least one processor 210 performs an operation of transmitting the third signal, the filtering circuitry 270 may transmit the third signal provided from the third RFFE circuitry 233 to the third antenna radiator 243.

Referring to FIG. 2A, the filtering circuitry 270 may include a diplexer 271. The diplexer 271 may be configured to separate the second signal on the second frequency band and the third signal on the third frequency band. The diplexer 271 may be disposed at a point at which the second transmission line P2 and the third transmission line P3 are connected.

According to an example embodiment, the diplexer 271 may be configured to transmit, to the third antenna radiator 243, the second signal from the divider circuitry 250. For example, the second signal outputted from the third port 253 may be provided to the diplexer 271 and transmitted to the third antenna radiator 243 via the diplexer 271 and then radiated. As the diplexer 271 does not transmit the second signal to the third transmission line P3, the second signal may not be transmitted to the third RFFE circuitry 233.

According to an example embodiment, the diplexer 271 may be configured to transmit, to the divider circuitry 250, the second signal from the third antenna radiator 243. For example, the second signal received via the third antenna radiator 243 may be provided to the diplexer 271 and transmitted to the divider circuitry 250 via the diplexer 271 and then transmitted to the second RFFE circuitry 232. As the diplexer 271 does not transmit the second signal to the third transmission line P3, the second signal may not be transmitted to the third RFFE circuitry 233.

According to an example embodiment, the diplexer 271 may be configured to transmit, to the third antenna radiator 243, the third signal from the third RFFE circuitry 233. For example, the third signal outputted from the third RFFE circuitry 233 may be provided to the diplexer 271 via the third transmission line P3 and transmitted to the third antenna radiator 243 via the diplexer 271 and then radiated. As the diplexer 271 does not transmit the third signal to the divider circuitry 250, the third signal may not be transmitted to the second RFFE circuitry 232.

According to an example embodiment, the diplexer 271 may be configured to transmit, to the third RFFE circuitry 233, the third signal from the third antenna radiator 243. For example, the third signal received via the third antenna radiator 243 may be provided to the diplexer 271 and transmitted to the third transmission line P3 via the diplexer 271 and then transmitted to the third RFFE circuitry 233 along the third transmission line P3. As the diplexer 271 does not transmit the third signal to the divider circuitry 250, the third signal may not be transmitted to the second RFFE circuitry 232.

As described above, as the second signal and the third signal are separated by the diplexer 271, the second signal and the third signal may not interfere with each other. The filtering circuitry 270 may include, in addition to the diplexer 271, a first band pass filter (e.g., a first band pass filter 272 of FIG. 2B) and/or a second band pass filter (e.g., a second band pass filter 273 of FIG. 2C).

Referring to FIG. 2B, the filtering circuitry 270 may include the first band pass filter 272. The first band pass filter 272 may be disposed on the second transmission line P2 between the divider circuitry 250 and a point at which the second transmission line P2 and the third transmission line P3 are connected to each other. The first band pass filter 272 may be configured to pass a signal on the second frequency band.

According to an example embodiment, the first band pass filter 272 may be configured to transmit, to the third antenna radiator 243, the second signal from the divider circuitry 250. For example, the second signal outputted from the third port 253 may be provided to the first band pass filter 272, pass through the first band pass filter 272, be transmitted to the third antenna radiator 243, and then be radiated.

According to an example embodiment, the first band pass filter 272 may be configured to transmit, to the divider circuitry 250, the second signal from the third antenna radiator 243. For example, the second signal received via the third antenna radiator 243 may pass through the first band pass filter 272, be transmitted to the divider circuitry 250, and then be transmitted to the second RFFE circuitry 232.

According to an example embodiment, the first band pass filter 272 may be configured to filter the third signal from the third RFFE circuitry 233. For example, in a case that the third signal provided from the third RFFE circuitry 233 to the third antenna radiator 243 is provided to the first band pass filter 272, the first band pass filter 272 may be configured to filter the third signal. As the first band pass filter 272 filters the third signal such that the third signal is not provided to the divider circuitry 250, the third signal may not be transmitted to the second RFFE circuitry 232.

According to an example embodiment, the first band pass filter 272 may be configured to filter the third signal from the third antenna radiator 243. For example, the third signal received via the third antenna radiator 243 may be provided to the third RFFE circuitry 233 along the second transmission line P2 and the third transmission line P3. In a case that the third signal is provided to the first band pass filter 272, the first band pass filter 272 may be configured to filter the third signal. As the first band pass filter 272 filters the third signal such that the third signal is not provided to the divider circuitry 250, the third signal may not be transmitted to the second RFFE circuitry 232.

Referring to FIG. 2C, the filtering circuitry 270 may include the second band pass filter 273. The second band pass filter 273 may be disposed on the third transmission line P3. The second band pass filter 273 may be configured to pass a signal on the third frequency band.

According to an example embodiment, the second band pass filter 273 may be configured to pass the third signal from the third RFFE circuitry 233. For example, the third signal outputted from the third RFFE circuitry 233 may pass through the second band pass filter 273 and be transmitted to the third antenna radiator 243.

According to an example embodiment, the second band pass filter 273 may be configured to pass the third signal from the third antenna radiator 243. For example, the third signal received via the third antenna radiator 243 may be provided to the second band pass filter 273 along the second transmission line P2 and the third transmission line P3, pass through the second band pass filter 273, and be transmitted to the third RFFE circuitry 233.

According to an example embodiment, the second band pass filter 273 may be configured to filter the second signal from the divider circuitry 250. For example, in a case that the second signal provided from the divider circuitry 250 to the third antenna radiator 243 is provided to the second band pass filter 273 along the third transmission line P3, the second band pass filter 273 may be configured to filter the second signal. As the second band pass filter 273 filters the second signal, the second signal may not be transmitted to the third RFFE circuitry 233.

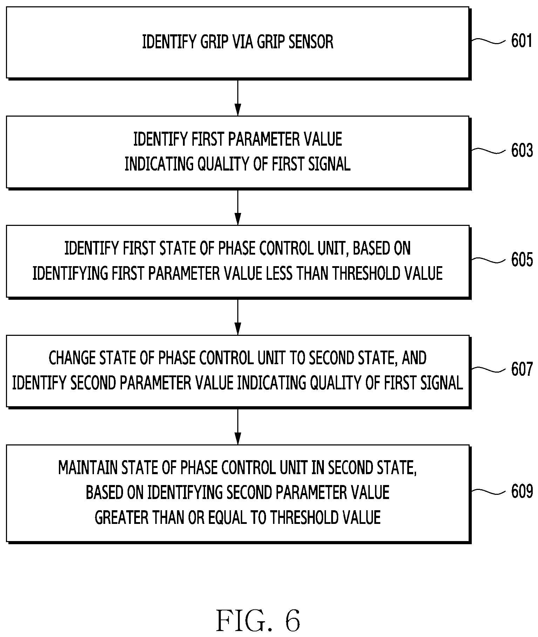

Referring to FIG. 2A, FIG. 2B, and FIG. 2C, an exemplary electronic device 101 may further include a grip sensor 290 to identify a grip of a user with respect to the electronic device 101. The at least one processor 210 may be configured to control the phase control unit 260 based on identification of the grip. The operation is described below via FIG. 6.

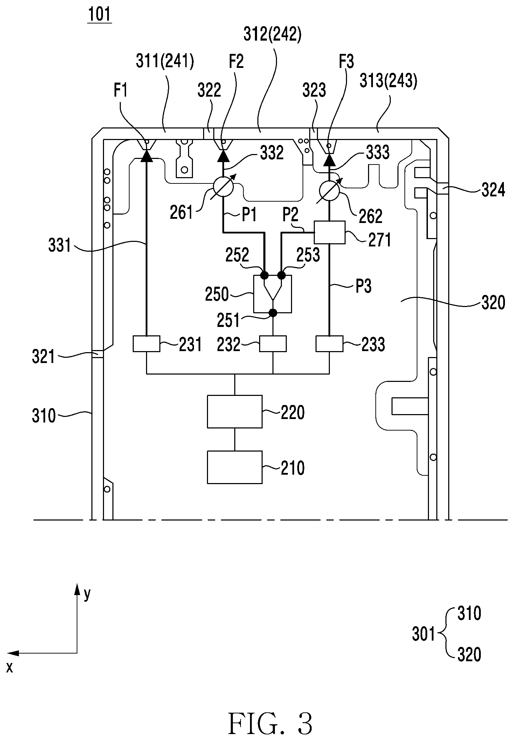

FIG. 3 illustrates an electronic device according to an example embodiment.

Referring to FIG. 3, the electronic device 101 according to an example embodiment may include a housing 301 defining an exterior of the electronic device 101. The housing 301 may include a peripheral part 310 and a supporting part 320. The peripheral part 310 may define a side exterior surface of the electronic device 101. The supporting part 320 may support components (e.g., a printed circuit board, or a battery) of the electronic device 101. In terms of supporting the components, the supporting part 320 may be referred to as a supporting member, a supporting plate, or a bracket.

According to an example embodiment, the peripheral part 310 may include a first conductive portion 311, a second conductive portion 312, and/or a third conductive portion 313. The first conductive portion 311, the second conductive portion 312, and/or the third conductive portion may define a portion of a side exterior surface of the electronic device 101. The first conductive portion 311 (e.g., the first antenna radiator 241 of FIG. 2A), the second conductive portion 312 (e.g., the second antenna radiator 242 of FIG. 2A), and the third conductive portion 313 (e.g., the third antenna radiator 243 of FIG. 2A) may be physically separated from each other by non-conductive portions. For example, the non-conductive portions may include a first non-conductive portion 321, a second non-conductive portion 322, a third non-conductive portion 323, and/or a fourth non-conductive portion 324. The first non-conductive portion 321 may be formed on a side exterior surface in a +x direction of the peripheral part 310. The second non-conductive portion 322 may be formed on a side exterior surface in a +y direction of the peripheral part 310. The third non-conductive portion 323 may be formed on the side exterior surface in the +y direction of the peripheral part 310 and may be spaced apart from the second non-conductive portion 322 toward a -x direction. The fourth non-conductive portion 324 may be formed on a side exterior surface in the -x direction of the peripheral part 310. According to an example embodiment, the first conductive portion 311 may be formed between the first non-conductive portion 321 and the second non-conductive portion 322. The second conductive portion 312 may be formed between the second non-conductive portion 322 and the third non-conductive portion 323. The third conductive portion 313 may be formed between the third non-conductive portion 323 and the fourth non-conductive portion 324. The plurality of non-conductive portions formed between the plurality of conductive portions, as a dielectric, may limit an electrical length of a conductive portion operating as an antenna radiator. For example, the non-conductive portions may contact an opening part between the peripheral part 310 and the supporting part 320. For example, the opening part may be filled with a non-conductive material (e.g., poly carbonate).

According to an example embodiment, a first antenna radiator (e.g., the first antenna radiator 241 of FIG. 2A), a second antenna radiator (e.g., the second antenna radiator 242 of FIG. 2A), and/or a third antenna radiator (e.g., the third antenna radiator 243 of FIG. 2A) may be implemented as conductive portions forming at least a portion of the peripheral part 310. For example, the first conductive portion 311 may operate as the first antenna radiator 241, the second conductive portion 312 may operate as the second antenna radiator 242, and/or the third conductive portion 313 may operate as the third antenna radiator 243. The first RFFE circuitry 231 may feed a first signal on a first frequency band to a first feeding point F1 of the first conductive portion 311. The RF transceiver 220 may up-convert a baseband digital signal provided from the at least one processor 210 into the first signal having a frequency on the first frequency band and convert it into an analog signal. The first signal may be provided to the first feeding point F1 of the first conductive portion 311 and radiated outside the electronic device 101 via the first conductive portion 311. When the first signal is radiated, a radiation pattern according to the first signal may be formed.

According to an example embodiment, while the first signal is radiated, the second signal may be radiated via the second conductive portion 312 and the third conductive portion 313. A signal on the first frequency band provided from the second RFFE circuitry 232 may be inputted to a first port (e.g., the first port 251 of FIG. 2A) of divider circuitry (e.g., the divider circuitry 250 of FIG. 2A). The signal may be branched into the second signal outputted to a second port (e.g., the second port 252 of FIG. 2A) of the divider circuitry 250 and the second signal outputted to the third port 253 of the divider circuitry 250. The second signal outputted to the second port 252 may be fed to a second feeding point F2 of the second conductive portion 312 along the first transmission line P1. The second signal outputted to the third port 253 may be fed to a third feeding point F3 of the third conductive portion 313 along the second transmission line P2. Among the second transmission line P2, a transmission line connected to the second feeding point F2 may be referred to as a second feeding line 332, and among the third transmission line P3, a transmission line connected to the third feeding point F3 may be referred to as a third feeding line 333.

According to an example embodiment, the electronic device 101 may include a phase control unit (e.g., the phase control unit 260 of FIG. 2A). For example, the electronic device 101 may include at least one of the first phase shifter 261 and/or the second phase shifter 262. The first phase shifter 261 disposed on the first transmission line P1 may shift a phase of the second signal provided to the second conductive portion 312, and the second phase shifter 262 disposed on the second transmission line P2 may shift a phase of the second signal provided to the third conductive portion 313. As the phase of the second signal is shifted, a peak direction of a radiation pattern formed from the second conductive portion 312 and the third conductive portion 313 may have a peak direction based on the shifted phase of the second signal. In FIG. 3, the first phase shifter 261 and the second phase shifter 262 are illustrated as an example of the phase control unit 260, but the phase shifters 261 and 262 may be replaced with matching circuitries 263 and 264 of FIG. 4C.

According to an example embodiment, as illustrated in FIG. 3, the second conductive portion 312 may be disposed between a portion of the first conductive portion 311 and a portion of the third conductive portion 313. As the second conductive portion 312 is adjacent to the first conductive portion 311, a peak direction of a radiation pattern formed by feeding of the second conductive portion 312 may be substantially identical or similar to a peak direction of a radiation pattern formed by feeding of the first conductive portion 311.

If a peak direction of a radiation pattern (e.g., a first radiation pattern) formed from the first conductive portion 311 and a peak direction of a radiation pattern (e.g., a second radiation pattern) formed from the second conductive portion 312 are substantially identical or similar, mutual interference between the first signal and the second signal may be caused. The interference may cause degradation (e.g., degradation of a throughput) of communication performance of the electronic device 101.

According to an example embodiment, as the phase of the second signal is shifted, a peak direction of the second radiation pattern may be controlled. For example, when the phase of the second signal is shifted by the phase control unit 260, the peak direction of the second radiation pattern may be formed differently from the peak direction of the first radiation pattern. As the peak direction of the second radiation pattern is changed, interference between the first signal and the second signal is reduced, and thus degradation of communication performance of the electronic device 101 may be reduced.

According to an example embodiment, on the first frequency band and the second frequency band at least partially overlapping , the second conductive portion 312 and the third conductive portion 313 may operate as one antenna, but the electronic device 101 may include filtering circuitry (e.g., the filtering circuitry 270 of FIG. 2A) for the third signal on the third frequency band, and thus the third signal may be radiated outside the electronic device 101 via the third conductive portion 313. In FIG. 3, the diplexer 271 is illustrated as an example of the filtering circuitry 270, but the diplexer 271 may be replaced with the first band pass filter 272 of FIG. 2B or the second band pass filter 273 of FIG. 2C.

According to an example embodiment, the third conductive portion 313 may operate alone as an antenna for the third signal on the third frequency band. In an embodiment, the third signal on the third frequency band provided from the third RFFE circuitry 233 may be provided to the third feeding point F3 of the third conductive portion 313 and radiated outside the electronic device 101 via the third conductive portion 313.

According to an example embodiment, the filtering circuitry 270 may be electrically connected to the third conductive portion 313. As described above, the filtering circuitry 270 may include at least one of a diplexer (e.g., the diplexer 271 of FIG. 2A), a first band pass filter (e.g., the first band pass filter 272 of FIG. 2B), or a second band pass filter (e.g., the second band pass filter 273 of FIG. 2C). The filtering circuitry 270 may operate such that the third conductive portion 313 is used together with the second conductive portion 312 for the second signal or the third conductive portion 313 is used alone for the third signal. The electronic device 101 may transmit and/or receive signals of various frequency bands, by using the first conductive portion 311, the second conductive portion 312, and the third conductive portion 313.

In FIG. 3, the first antenna radiator 241, the second antenna radiator 242, and/or the third antenna radiator 243 have been described as an example implemented as conductive portions of the peripheral part 310, but embodiments of the present disclosure are not limited thereto. According to an example embodiment, each of the first antenna radiator 241, the second antenna radiator 242, and/or the third antenna radiator 243 may be implemented as a patch antenna, a laser direct structuring (LDS) antenna, or a flexible printed circuit board (FPCB) antenna, and even in this case, a peak direction of the second radiation pattern may be controlled via shifting of a phase.

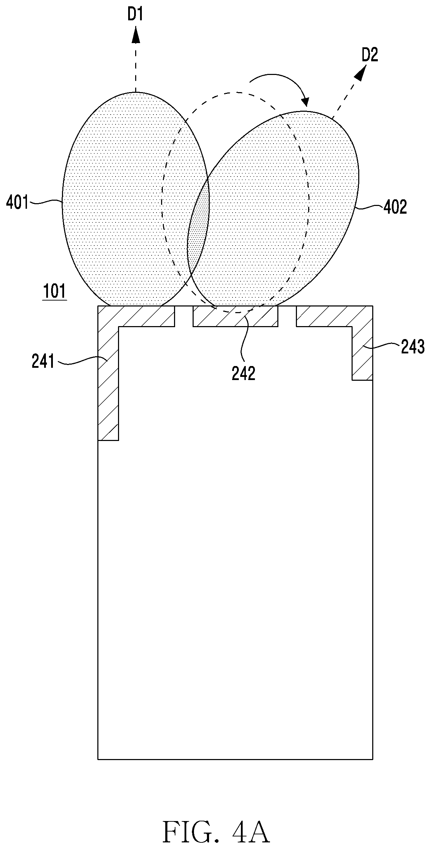

FIG. 4A illustrates an electronic device and a radiation pattern according to an example embodiment.

Referring to FIG. 4A, the electronic device 101 according to an example embodiment may include divider circuitry (e.g., the divider circuitry 250 of FIG. 2A) and/or a phase control unit (e.g., the phase control unit 260 of FIG. 2A), as described with reference to FIG. 2A, FIG. 2B, FIG. 2C, and FIG. 3. The second signal provided from the second RFFE circuitry (e.g., the second RFFE circuitry 232 of FIG. 2A) may be branched via the divider circuitry 250. The second signal may be provided to the second antenna radiator 242 and the third antenna radiator 243, via the divider circuitry 250. The phase control unit 260 may cause a difference between a first phase of the second signal transmitted to the second antenna radiator 242 and a second phase of the second signal transmitted to the third antenna radiator 243, by shifting a phase of the second signal. Based on the difference between the first phase and the second phase, a peak direction of the second radiation pattern 402 may be controlled. According to an example embodiment, as the peak direction of the second radiation pattern 402 is controlled, a first radiation pattern 401 and a second radiation pattern 402 may be formed such that a peak of the first radiation pattern 401 is directed toward a first direction D1 and a peak of the second radiation pattern 402 is directed toward a second direction D2 different from the first direction D1.

The electronic device 101 according to an example embodiment may improve communication performance by controlling the peak direction of the second radiation pattern 402 according to the second signal, while the first signal is transmitted and/or received via the first antenna radiator 241. Referring to FIG. 4A, as a peak direction (e.g., the first direction D1) of the first radiation pattern 401 and a peak direction (e.g., the second direction D2) of the second radiation pattern 402 are formed differently, an ECC between the first radiation pattern 401 and the second radiation pattern 402 may be reduced. The electronic device 101 according to an example embodiment may reduce interference between the first signal transmitted and/or received via the first radiation pattern 401 and the second signal transmitted and/or received via the second radiation pattern 402. As the interference is reduced, the electronic device 101 according to an example embodiment may provide improved communication performance.

Embodiments of the electronic device 101 for shifting a phase of the second signal may be various. For example, the electronic device 101 may include an element such as a phase shifter (e.g., the first phase shifter 261 of FIG. 4B, or the second phase shifter 262) or matching circuitry (e.g., the first matching circuitry 263 of FIG. 4C, or the second matching circuitry 264). For example, the electronic device 101 may include a first transmission line P1 and a second transmission line P2 having different lengths or widths. For example, in a case that the electronic device 101 includes at least one of the phase shifters 261 and 262, the phase shifters 261 and 262 may be configured to provide a difference between a first phase of the second signal and a second phase of the second signal. The phase shifters 261 and 262 may be configured such that a signal before passing through the phase shifters 261 and 262 and a signal after passing through the phase shifters 261 and 262 have a designated phase difference. For example, the designated phase difference may be about 45 degrees, but is not limited thereto. For example, the phase difference caused by the phase shifters 261 and 262 may be a value determined based on a structure of the electronic device 101, performance, or a communication environment in which the electronic device 101 is used. However, it is not limited thereto, and the phase difference may also be controllable.

FIG. 4B is a block diagram of an electronic device according to an example embodiment including a phase shifter.

Referring to FIG. 4B, a phase control unit (e.g., the phase control unit 260 of FIG. 2A) may include at least one of the first phase shifter 261 or the second phase shifter 262. The first phase shifter 261 and the second phase shifter 262 may be configured to cause a phase difference between a first phase of the second signal transmitted from the divider circuitry 250 to the second antenna radiator 242 and a second phase of the second signal transmitted from the divider circuitry 250 to the third antenna radiator 243.

According to an example embodiment, the first phase shifter 261 may be disposed between the divider circuitry 250 and the second antenna radiator 242. The second phase shifter 262 may be disposed between the divider circuitry 250 and the third antenna radiator 243. The second signal may be outputted from the second RFFE circuitry 232, inputted to the first port 251, and then outputted to the second port 252 and the third port 253. The second signal outputted to the second port 252 of the divider circuitry 250 may be inputted to the first phase shifter 261 along the first transmission line P1. The first phase of the second signal inputted to the first phase shifter 261 may be shifted while passing through the first phase shifter 261. The second signal outputted to the third port 253 of the divider circuitry 250 may be inputted to the second phase shifter 262 along the second transmission line P2. The second phase of the second signal inputted to the second phase shifter 262 may be shifted while passing through the second phase shifter 262.

A peak direction of the second radiation pattern 402 formed when a second signal having an unshifted phase is radiated via the second antenna radiator 242 and the third antenna radiator 243 may be different from a peak direction of the second radiation pattern 402 formed when a second signal having a shifted phase is radiated via the second antenna radiator 242 and the third antenna radiator 243. As the peak direction of the second radiation pattern 402 is changed, the peak direction of the first radiation pattern 401 and the peak direction of the second radiation pattern 402 may be different. As the peak direction of the first radiation pattern 401 and the peak direction of the second radiation pattern 402 are differently formed, an ECC between the first radiation pattern 401 and the second radiation pattern 402 is reduced, and thus interference between the first signal and the second signal may be reduced.

According to an example embodiment, the first phase shifter 261 and/or the second phase shifter 262 may include a plurality of paths for a signal passing through an inside. The plurality of paths may be referred to as paths through which an inputted signal passes through the inside of the first phase shifter 261 and/or the second phase shifter 262. Each of the plurality of paths may shift a phase of an outputted signal differently. For example, a phase of the outputted signal may be determined according to a parameter value (e.g., capacitance or inductance) of a passive element (e.g., a capacitor and/or an inductor) disposed on the plurality of paths from the first phase shifter 261 and/or the second phase shifter 262 or a length of a path.

FIG. 4C is a block diagram of an electronic device including matching circuitry according to an example embodiment.

Referring to FIG. 4C, a phase control unit (e.g., the phase control unit 260 of FIG. 2A) may include at least one of the first matching circuitry 263 or the second matching circuitry 264. The first matching circuitry 263 and the second matching circuitry 264 may be configured to cause a phase difference between a first phase of the second signal transmitted from the divider circuitry 250 to the second antenna radiator 242 and a second phase of the second signal transmitted from the divider circuitry 250 to the third antenna radiator 243.

According to an example embodiment, the first matching circuitry 263 may include at least one first passive element including at least one of a capacitor or an inductor. For example, the at least one first passive element may include a first capacitor 263a and a first inductor 263b, but is not limited thereto.

According to an example embodiment, the first matching circuitry 263 may be disposed between the second antenna radiator 242 and the divider circuitry 250. For example, the first matching circuitry 263 may be electrically connected to the first transmission line P1. The first matching circuitry 263 may be configured to shift a first phase of the second signal transmitted to the second antenna radiator 242 along the first transmission line P1. A shift amount of the first phase of the second signal may be determined based on a parameter value (e.g., capacitance or inductance) of the at least one first passive element. For example, in a case that the first capacitor 263a is electrically connected to the first transmission line P1, the first phase shift amount of the second signal may be determined based on a first capacitance value of the first capacitor 263a.

According to an example embodiment, the second matching circuitry 264 may include at least one second passive element including at least one of a capacitor or an inductor. For example, the at least one second passive element may include a second capacitor 264a and a second inductor 264b, but is not limited thereto.

According to an example embodiment, the second matching circuitry 264 may be disposed between the third antenna radiator 243 and the divider circuitry 250. For example, the second matching circuitry 264 may be electrically connected to the second transmission line P2. The second matching circuitry 264 may be configured to shift a second phase of the second signal transmitted to the third antenna radiator 243 along the second transmission line P2. A shift amount of the second phase of the second signal may be determined based on a parameter value (e.g., capacitance or inductance) of the at least one second passive element. For example, in a case that the second capacitor 264a is electrically connected to the second transmission line P2, the second phase shift amount of the second signal may be determined based on a second capacitance value of the second capacitor 264a.

According to an example embodiment, a peak direction of the second radiation pattern 402 may be different from a peak direction of the second radiation pattern 402 formed when the second signal having a shifted phase is radiated via the second antenna radiator 242 and the third antenna radiator 243. As the peak direction of the second radiation pattern 402 is changed, the peak direction of the first radiation pattern 401 and the peak direction of the second radiation pattern 402 may be different. As the peak direction of the first radiation pattern 401 and the peak direction of the second radiation pattern 402 are differently formed, an ECC between the first radiation pattern 401 and the second radiation pattern 402 is reduced, and thus interference between the first signal and the second signal may be reduced.

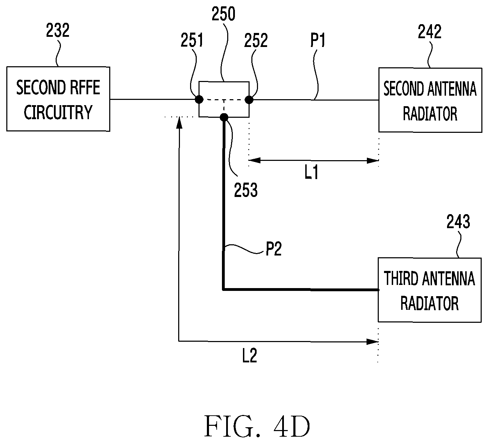

FIG. 4D is a block diagram of an electronic device according to an example embodiment including a second transmission line different from a first transmission line.

As described above, a phase of the second signal may be shifted via the phase control unit 260, but is not limited thereto. For example, in a case that a first length L1 of the second transmission line P2 transmitted from the divider circuitry 250 to the second antenna radiator 242 and a second length L2 of the third transmission line P3 transmitted from the divider circuitry 250 to the third antenna radiator 243 are different, a first phase of the second signal transmitted to the second antenna radiator 242 and a second phase of the second signal transmitted to the third antenna radiator 243 may be different. As a length of a transmission line is longer, a time taken for the second signal to pass increases, and thus a phase change of the second signal may be caused. The first length L1 of the first transmission line P1 may be different from the second length L2 of the second transmission line P2 to cause a phase difference between the first phase of the second signal transmitted from the divider circuitry 250 to the second antenna radiator 242 and the second phase of the second signal transmitted from the divider circuitry 250 to the third antenna radiator 243. As a phase change due to the difference between the first length L1 and the second length L2 may cause a change in a peak direction of the second radiation pattern 402, interference between the first signal and the second signal may be reduced.

According to an example embodiment, a phase may also be shifted based on a width of a transmission line. For example, since a width of a transmission line of a signal affects impedance, as the width of the transmission line is narrower, the impedance may be higher. If the impedance is higher, a phase of a signal may be delayed, and thus the phase of the signal may be shifted. According to an example embodiment, a first width of the first transmission line P1 may be different from a second width of the second transmission line P2 to cause a phase difference between a first phase of the second signal transmitted from the divider circuitry 250 to the second antenna radiator 242 and a second phase of the second signal transmitted from the divider circuitry 250 to the third antenna radiator 243. As a phase change due to a difference between the first width and the second width may cause a change in a peak direction D2 of the second radiation pattern 402, interference between the first signal and the second signal may be reduced.

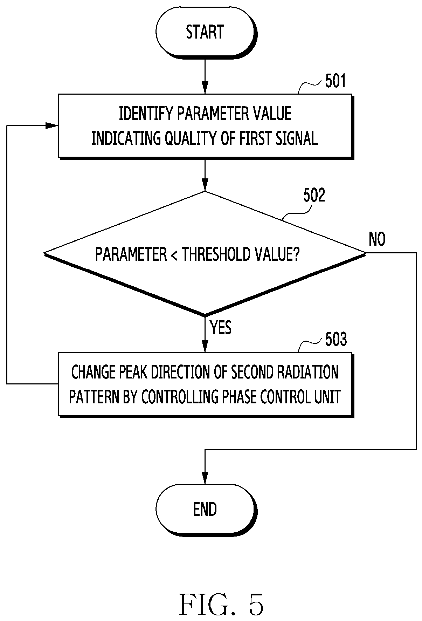

FIG. 5 is a flowchart illustrating an operation in which an electronic device according to an example embodiment controls a phase difference based on a quality of a signal.

According to an example embodiment, at least one processor (e.g., the at least one processor 210 of FIG. 2A) may be configured to control a phase control unit (e.g., the phase control unit 260 of FIG. 2A) to control a phase shift amount of a signal by the phase control unit 260. For example, in a case that a path through which the second signal passes inside a phase shifter (e.g., the first phase shifter 261 and/or the second phase shifter 262 of FIG. 4B) is changed, the phase shift amount of the second signal may be changed. For example, in a case that at least one passive element of matching circuitry (e.g., the first matching circuitry 263 and the second matching circuitry 264 of FIG. 4C) electrically connected to a transmission line is changed, the phase shift amount of the second signal may be changed.

For example, the phase control unit may be controlled by at least one processor (e.g., the at least one processor 210 of FIG. 2A). The at least one processor 210 may identify communication performance and, in a case that the communication performance is low, change a phase of an output signal by controlling the phase control unit. When the phase of the output signal is changed, a phase difference between a first phase of the second signal provided to a second antenna radiator (e.g., the second antenna radiator 242 of FIG. 2A) and a second phase of the second signal provided to a third antenna radiator (e.g., the third antenna radiator 243 of FIG. 2A) may be changed. The change in the phase difference may cause a change in a peak direction of the second radiation pattern, and thus communication performance may be improved.

Referring to FIG. 5, in operation 501, instructions, when executed by at least one processor (e.g., the at least one processor 210 of FIG. 2A) individually or collectively, may cause an electronic device (e.g., the electronic device 101 of FIG. 2A) to identify a parameter value indicating a quality of the first signal.

According to an example embodiment, the electronic device 101 may perform a MIMO operation, by using a first antenna radiator (e.g., the first antenna radiator 241 of FIG. 2A), a second antenna radiator (e.g., the second antenna radiator 242 of FIG. 2A), and a third antenna radiator (e.g., the third antenna radiator 243 of FIG. 2A). The first antenna radiator 241 may transmit and/or receive a first signal on a first frequency band. While the first signal is transmitted and/or received, the second antenna radiator 242 and the third antenna radiator 243 may transmit and/or receive a second signal on a second frequency band at least partially overlapping the first frequency band. A first radiation pattern (e.g., the first radiation pattern 401 of FIG. 4A) may be formed from the first antenna radiator 241, and a second radiation pattern (e.g., the second radiation pattern 402 of FIG. 4A) may be formed from the second antenna radiator 242 and the third antenna radiator 243. A peak direction of the second radiation pattern may be determined based on a state of the phase control unit 260. For example, according to the state of the phase control unit 260, a phase difference between a first phase of the second signal provided to the second antenna radiator 242 and a second phase of the second signal provided to the third antenna radiator 243 may be different. The peak direction of the second radiation pattern may be determined based on the difference between the first phase and the second phase.

According to an example embodiment, the quality of the first signal may vary according to the peak direction of the second radiation pattern. For example, when the peak direction of the second radiation pattern is different from the peak direction of the first radiation pattern, interference by the second signal may be reduced, and thus the quality of the first signal may be improved. If the difference between the first phase and the second phase caused by the phase control unit is not appropriate, the peak direction of the first radiation pattern and the peak direction of the second radiation pattern may be substantially identical or similar, and thus the quality of the first signal may be degraded. For example, the at least one processor 210 may be configured to identify a parameter value indicating the quality of the first signal in a first state of the phase control unit 260.

In the present disclosure, a parameter value indicating a quality of a signal may be at least one of received signal strength indicator (RSSI), reference signal received power (RSRP), beam reference signal received power (BRSRP), reference signal received quality (RSRQ), signal to interference and noise ratio (SINR), carrier to interference and noise ratio (CINR), signal to noise ratio (SNR), error vector magnitude (EVM), bit error rate (BER), or block error rate (BLER). In addition to the above-described examples, other terms having technical meanings equivalent thereto or other metrics indicating channel quality may be used. In the present disclosure, a parameter value indicating signal quality being high indicates a case that a signal quality value related to a signal size is large or a signal quality value related to an error rate is small. For example, as a parameter value indicating a first signal quality is higher, it may indicate that interference of the second signal with respect to the first signal is smaller.

In operation 502, the instructions, when executed by the at least one processor 210 individually or collectively, may cause the electronic device 101 to compare a parameter with a threshold value.

For example, the threshold value is a reference value indicating interference between the first signal and the second signal, and a parameter value greater than or equal to the threshold value may indicate a state in which the interference is small and a communication quality is good. A parameter value less than the threshold value may indicate a state in which the interference is large and the communication quality is degraded. In a case that the parameter value less than the threshold value is identified, operation 503 may be performed. In a case that the parameter value greater than or equal to the threshold value is identified, since the communication quality is in a good state, the operation may be terminated.

In operation 503, the instructions, when executed by the at least one processor 210 individually or collectively, may cause the phase control unit 260 to be controlled. According to an example embodiment, the at least one processor 210 may be configured to control the phase control unit 260 based on identifying a parameter value less than the threshold value. For example, the at least one processor 210 may be configured to change a path through which a signal passes among a plurality of paths inside the phase shifters 261 and 262 to control a peak direction of a second radiation pattern (e.g., the second radiation pattern 402 of FIG. 4A). Since a degree of a phase controlled for each of the plurality of paths inside the phase shifters 261 and 262 is different, a phase of the second signal may be changed based on selection of a path inside the phase shifters 261 and 262. For example, the at least one processor 210 may be configured to control matching circuitry 263 and 264 to control the peak direction of the second radiation pattern. Since impedance of a second transmission line (e.g., the second transmission line P2 of FIG. 2A) or a third transmission line (e.g., the third transmission line P3 of FIG. 2A) may be controlled via control of the matching circuitry 263 and 264, the phase of the second signal may be changed. As the phase of the second signal is changed, the peak direction of the second radiation pattern may be changed, and thus a quality of the first signal may be changed.

According to an example embodiment, after operation 503 is performed, operation 501 may be performed again. When operation 501 is performed again, a parameter value may be identified with respect to the first signal after the phase control unit 260 is controlled. In a case that a parameter value of the first signal identified again is less than the threshold value, the at least one processor 210 may control, by controlling the phase control unit 260 again, the phase control unit 260 until quality of the first signal is improved. In a case that the parameter value of the first signal identified again is greater than or equal to the threshold value, since the quality of the first signal is in a good state, the at least one processor 210 may be configured to terminate the operation.

FIG. 6 is a flowchart illustrating an operation in which an electronic device according to an example embodiment controls a phase difference based on identification of a grip.

An electronic device (e.g., the electronic device 101 of FIG. 2A) according to an example embodiment may include a sensor (e.g., the grip sensor 290 of FIG. 2A) to identify a grip of a user with respect to the electronic device 101. Due to the grip of the user, communication performance of the electronic device 101 may be difficult to maintain. For example, in a case that the user holds a portion of an antenna radiator with a hand, transmission and reception of a signal may be difficult by the hand of the user. The electronic device 101 according to an example embodiment may be configured to control a peak direction of a second radiation pattern (e.g., the second radiation pattern 402 of FIG. 4A) by controlling a phase control unit (e.g., the phase control unit 260 of FIG. 2A) when the grip of the user is identified.

Referring to FIG. 6, in operation 601, instructions, when executed by at least one processor (e.g., the at least one processor 210 of FIG. 2A) individually or collectively, may cause the electronic device 101 to identify a grip of a user via a grip sensor (e.g., the grip sensor 290 of FIG. 2A).

According to an example embodiment, the grip sensor 290 may be configured to measure a capacitance change according to the grip of the user with respect to a housing (e.g., the housing 301 of FIG. 3) defining an exterior of the electronic device 101. In a case that a body of the user and the housing 301 contact each other, a change in a capacitance value of the grip sensor 290 may be caused by the contact. The grip sensor 290 may be configured to provide information on the capacitance value to the at least one processor 210. The at least one processor 210 may be configured to identify the capacitance value from the information and identify the grip of the user with respect to the housing 301 based on whether the capacitance value corresponds to a reference value indicating the grip of the user. For example, the reference value may be set as a capacitance value caused when contacting the body of the user.

In operation 603, the instructions, when executed by the at least one processor 210 individually or collectively, may cause the electronic device 101 to identify a first parameter value indicating a quality of a first signal.

According to an example embodiment, in a case that the grip of the user is identified, the electronic device 101 may be configured to identify the first parameter value indicating the quality of the first signal to check communication performance. The first parameter value is a term distinguished from a second parameter value to be described below, and may be referred to as a parameter value identified in a state before controlling a phase control unit (e.g., the phase control unit 260 of FIG. 2A). For example, in a case that the quality of the first signal is degraded by the grip of the user, the parameter value indicating the quality of the first signal may be reduced. In an operation to be described below, a state of the phase control unit 260 may indicate a state specified such that a phase shifter or matching circuitry provides a specific phase shift amount.

In operation 605, the instructions, when executed by the at least one processor 210 individually or collectively, may cause the electronic device 101 to identify a first state of the phase control unit 260 based on identifying the first parameter value less than a threshold value.

According to an example embodiment, in a case that the identified first parameter value is less than the threshold value, the at least one processor 210 may be configured to identify the first state that is a current state of the phase control unit 260. The threshold value is a reference value indicating interference between the first signal and the second signal, and a parameter value less than the threshold value may indicate a state in which the communication quality is degraded due to a high level of interference. In a case of identifying that the communication quality is degraded, the at least one processor 210 may identify the first state that is the current state to change a state of the phase control unit 260.

In operation 607, the instructions, when executed by the at least one processor 210 individually or collectively, may cause a state of the phase control unit 260 to be changed to a second state and a second parameter value indicating the quality of the first signal to be identified.

According to an example embodiment, the at least one processor 210 may control the phase control unit 260 such that a state of the phase control unit 260 is changed from the first state to the second state to improve the communication performance. Since a peak direction of a second radiation pattern (e.g., the second radiation pattern 402 of FIG. 4A) is determined according to the state of the phase control unit 260, the first state may indicate a state in which the first signal and the second signal are interfered with each other as the peak direction of the second radiation pattern is substantially identical or similar to a peak direction of a first radiation pattern (e.g., the first radiation pattern 401 of FIG. 4A). The at least one processor 210 may be configured to identify the second parameter value indicating the quality of the first signal again after changing the phase control unit 260 to the second state.

In operation 609, the instructions, when executed by the at least one processor 210 individually or collectively, may cause a state of the phase control unit 260 to be maintained in the second state, based on identifying the second parameter value greater than or equal to the threshold value.

According to an example embodiment, in a case of identifying that the second parameter value is greater than or equal to the threshold value, the at least one processor 210 may determine that the second state is a state for improving the communication performance of the electronic device 101. As the state of the phase control unit 260 is changed to the second state, the peak direction of the second radiation pattern may be changed, and thus interference between the first signal and the second signal may be reduced. The at least one processor 210 may be configured to maintain the state of the phase control unit 260 in the second state, in a case of identifying the second parameter value greater than or equal to the threshold value. If the second parameter value identified in the second state of the phase control unit 260 is less than the threshold value, the at least one processor 210 may control the phase control unit 260 until identifying a parameter value less than the threshold value.

According to an example embodiment, the at least one processor 210 may control a phase of the second signal by controlling the phase control unit 260. As the phase is controlled, the peak direction of the second radiation pattern may be controlled, and thus degradation of communication performance with respect to the grip may be reduced. The at least one processor 210 may improve communication performance by controlling the phase control unit 260 so as to overcome the degradation of the communication performance with respect to the grip.

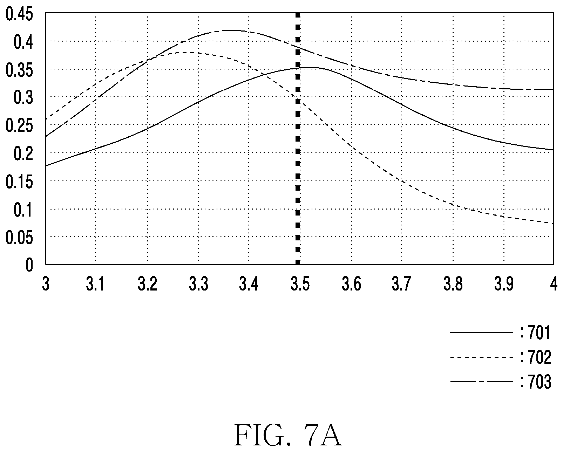

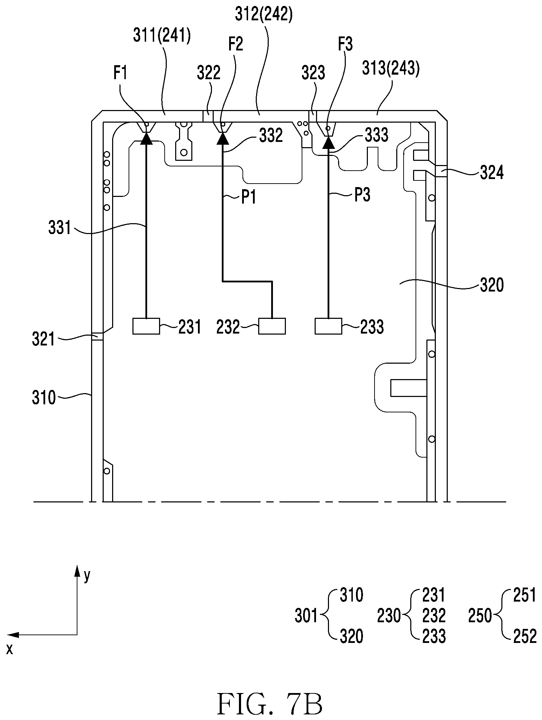

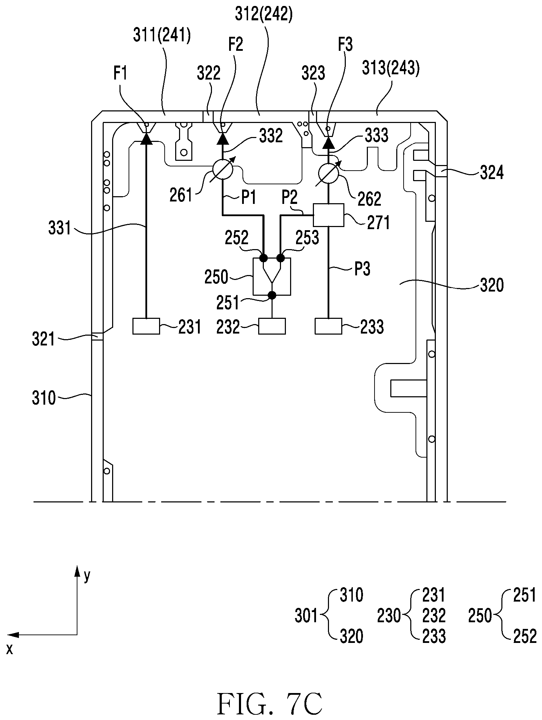

FIG. 7A illustrates a gain of antennas. FIG. 7B illustrates an electronic device using a second antenna radiator. FIG. 7C illustrates an electronic device using a second antenna radiator and a third antenna radiator together.

Graphs illustrated in FIG. 7A indicate a gain of each of antennas including antenna radiators. An x-axis of a graph is frequency (unit: giga hertz (GHz)), and a y-axis is a gain (unit: decibel (dB)).

A first graph 701 of FIG. 7A indicates a gain of an antenna (e.g., a first antenna) including a first antenna radiator (e.g., the first antenna radiator 241 of FIG. 2A) with respect to a frequency. Referring to FIG. 7B or FIG. 7C, when a first feeding point F1 of the first conductive portion 311 operating as the first antenna radiator 241 is fed from the first RFFE circuitry 231, the first antenna having a gain as in the first graph 701 of FIG. 7A may be formed.

A second graph 702 of FIG. 7A indicates a gain of an antenna (e.g., a second antenna) including a second antenna radiator (e.g., the second antenna radiator 242 of FIG. 2A) with respect to a frequency. Referring to FIG. 7B, the second antenna having a gain as in the second graph 702 of FIG. 7A may be formed when a second signal is fed to a second feeding point F2 of the second conductive portion 312 along the first transmission line P1 from the second RFFE circuitry 232.

A third graph 703 of FIG. 7A indicates a gain of an antenna (e.g., a third antenna) including the second antenna radiator 242 and a third antenna radiator (e.g., the third antenna radiator 243 of FIG. 2A) with respect to a frequency. Referring to FIG. 7C, the third antenna including the second antenna radiator 242 and the third antenna radiator 243 is referred to as an antenna in which a signal provided from the second RFFE circuitry 232 is fed, via the divider circuitry 250, to each of the second feeding point F2 of the second conductive portion 312 operating as the second antenna radiator 242 and the third feeding point F3 of the third conductive portion 313 operating as the third antenna radiator 243. A phase difference between a first phase of the second signal provided to the second antenna radiator 242 and a second phase of the second signal provided to the third antenna radiator 243 is referred to as about 90 degrees. When the second feeding point F2 and the third feeding point F3 are fed, the third antenna having a gain as in the third graph 703 of FIG. 7A may be formed.

Comparing the second antenna and the third antenna, as the second signal provided from second RFFE circuitry (e.g., the second RFFE circuitry 232 of FIG. 2A) is provided to the second antenna radiator 242, the second antenna may transmit and/or receive a signal via the second antenna radiator 242. As the second signal provided from the second RFFE circuitry 232 is provided to each of the second antenna radiator 242 and the third antenna radiator 243, the third antenna transmit and/or receive a signal via the second antenna radiator 242 and the third antenna radiator 243.

Referring to the first graph 701, a gain of the first antenna has a gain of about 0.39 dB with respect to a frequency of about 3.5 GHz. Referring to the second graph 702, a gain of the second antenna has a gain of about 0.29 dB with respect to a frequency of about 3.5 GHz. Referring to the third graph 703, a gain of the third antenna may be about 0.6 dB higher than the gain of the second antenna. In a case of the third antenna, a phase difference between a first phase of the second signal provided to the second antenna radiator 242 and a second phase of the second signal provided to the third antenna radiator 243 is formed as about 90 degrees, and thus a peak direction of a radiation pattern (e.g., the second radiation pattern 402 of FIG. 4A) according to the second signal of the first phase and the second signal of the second phase may be controlled. As the peak direction of the radiation pattern according to the second signal of the first phase and the second signal of the second phase is controlled, a peak direction of a radiation pattern (e.g., the first radiation pattern 401 of FIG. 4A) by the first signal and a peak direction of a radiation pattern by the second signal may be different. As the peak directions are formed differently from each other, a gain of the third antenna may be improved by about 10% compared to a gain of the second antenna. In a case of the second antenna, the peak direction of the radiation pattern by the first signal and the peak direction of the radiation pattern by the second signal are substantially identical or similar, and thus interference between the first signal and the second signal may be relatively large. Due to the interference, a gain of the second antenna may be lower than a gain of the third antenna.

Referring to FIG. 7A, in a case that only the second antenna radiator 242 is used while the first signal is transmitted and/or received via the first antenna radiator 241, it may be checked that communication performance is degraded due to interference between radiation patterns. The electronic device 101 according to an example embodiment may improve communication performance by transmitting and/or receiving the second signal on the second frequency band at least partially overlapping the first frequency band, by using the second antenna radiator 242 and the third antenna radiator 243. As a peak direction of a radiation pattern according to the second signal is controlled based on a phase difference between a first phase of the second signal transmitted to the second antenna radiator 242 and a second phase of the second signal transmitted to the third antenna radiator 243, the communication performance may be improved.

According to an example embodiment, interference between the first antenna and the third antenna may be changed to be smaller than interference between the first antenna and the second antenna, according to a phase difference. With respect to a signal having a frequency of about 3.5 GHz, an ECC between the first antenna and the second antenna may be about 0.283. [Table 1] below indicates an envelope correlation coefficient (ECC) between the first antenna and the third antenna according to a difference between the first phase and the second phase with respect to a signal having a frequency of about 3.5 GHz. The ECC is a parameter indicating how independent radiation patterns are, and as the ECC is greater, interference between the radiation patterns is greater, and as the ECC is smaller, interference between the radiation patterns is smaller.

**[Table 1]**

| Phase difference | 0 | 45 | 90 | 180 | 270 |
|---|---|---|---|---|---|
| ECC | 0.046 | 0.004 | 0.068 | 0.241 | 0.223 |

Referring to [Table 1], the ECC between the first antenna and the third antenna is smaller than the ECC between the first antenna and the second antenna. For example, in a case that a difference between the first phase and the second phase is about 45 degrees, as the ECC is reduced to 0.004, it may be checked that the ECC between the first antenna and the third antenna is reduced to about 1/70 of 0.283, which is the ECC between the first antenna and the second antenna. The exemplary electronic device 101 may stably perform a MIMO operation using the first antenna and the third antenna capable of operating substantially independently. As the MIMO operation is stably performed, data throughput of the electronic device 101 may be increased.

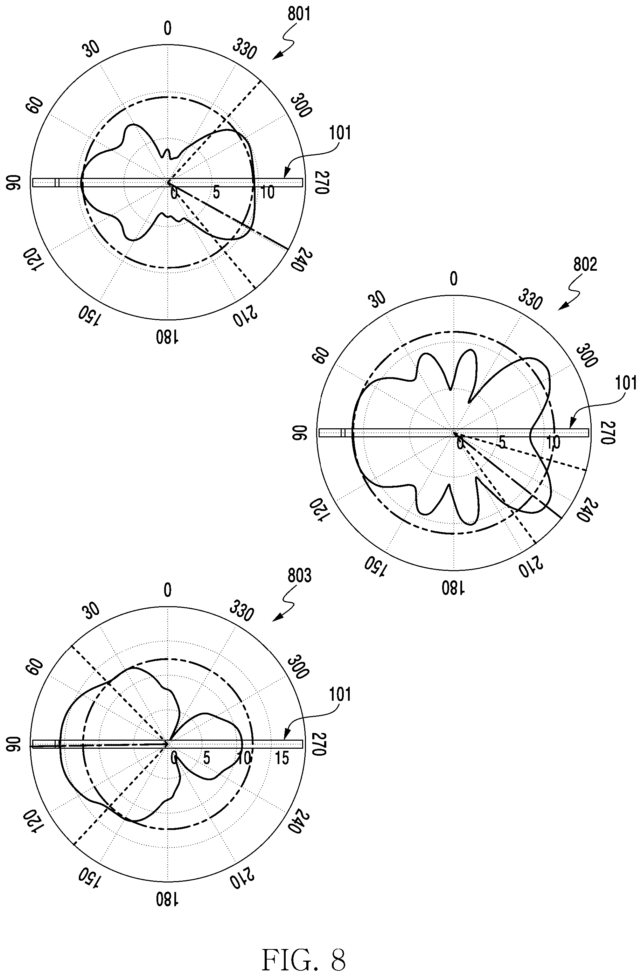

FIG. 8 illustrates a radiation pattern of each of a first antenna, a second antenna, and a third antenna.

The first antenna may be referred to as an antenna including a first antenna radiator (e.g., the first antenna radiator 241 of FIG. 2A). The second antenna may be referred to as an antenna including a second antenna radiator (e.g., the second antenna radiator 242 of FIG. 2A). The third antenna may be referred to as an antenna using the second antenna radiator (e.g., the second antenna radiator 242 of FIG. 2A) and a third antenna radiator (e.g., the third antenna radiator 243 of FIG. 2A) as one antenna radiator.

The radiation pattern illustrated in FIG. 8 may be obtained by displaying, with respect to an azimuth angle, a result of measuring electric field strength of electromagnetic waves radiated from antennas while rotating the azimuth angle by 360 degrees with respect to the electronic device 101 in a posture in which an elevation angle is fixed at 90 degrees. For example, a distance from a pole indicates electric field strength, and an angle with respect to a polar axis indicates an azimuth angle. An angle of 0 degrees indicates a direction in which a front surface of the electronic device 101 is directed. An angle of 180 degrees with respect to the polar axis indicates a direction in which a rear surface of the electronic device 101 is directed. An angle of 90 degrees with respect to the polar axis indicates a direction in which an upper portion of the electronic device 101 is directed. An angle of 270 degrees with respect to the polar axis indicates a direction in which a lower portion of the electronic device 101 is directed.

A first radiation pattern 801 of FIG. 8 is a radiation pattern for the first antenna. A second radiation pattern 802 of FIG. 8 is a radiation pattern for the second antenna. A third radiation pattern 803 of FIG. 8 is a radiation pattern for the third antenna.

Referring to FIG. 8, the first radiation pattern 801 may represent a peak characteristic at an azimuth angle of about 240 degrees. The second radiation pattern 802 may represent a peak characteristic at an azimuth angle of about 230 degrees. Since angles of azimuth angles at which the peak characteristic of the first radiation pattern 801 and the peak characteristic of the second radiation pattern 802 appear are similar, a peak direction of the first radiation pattern 801 and a peak direction of the second radiation pattern 802 may be similar. Since forms and peak directions of the first radiation pattern 801 and the second radiation pattern 802 are similar to each other, the ECC may be high, and a spatial diversity effect may be low in a MIMO operation, and thus communication performance may be degraded. Referring to [Table 1], the ECC between the first antenna and the second antenna is relatively high because the first radiation pattern 801 and the second radiation pattern 802 have a similar form and have a similar peak direction.

Referring to the third radiation pattern 803, a peak characteristic of the third radiation pattern 803 may represent a peak characteristic at an azimuth angle of about 90 degrees. The third radiation pattern 803, which is a radiation pattern formed by the third antenna, and a peak direction may be changed by a phase difference between a first phase of the second signal provided to the second antenna radiator 242 and a second phase of the second signal provided to the third antenna radiator 243. The peak direction changed by the phase difference causes a peak characteristic of the third radiation pattern 803 different from the peak characteristic of the first radiation pattern 801, and thus may cause the first radiation pattern 801 and the third radiation pattern 803 to have different forms and have different peak directions. In a case that the first antenna and the third antenna operate together for a MIMO operation, degradation of communication performance may be reduced. For example, in a case that the first antenna and the third antenna operate together, a throughput of data may be increased. Referring to [Table 1], the ECC between the first antenna and the third antenna is relatively low because the first radiation pattern 801 and the third radiation pattern 803 have different forms and different peak directions.

Referring to FIG. 8, the example electronic device 101 may reduce interference between the first antenna and the third antenna by using the third antenna, instead of the second antenna. The electronic device 101 may include divider circuitry (e.g., the divider circuitry 250 of FIG. 2A) and a phase shifter (e.g., the phase shifter 260 of FIG. 2A) to use the third antenna. The electronic device 101 may provide improved communication performance by transmitting and/or receiving the first signal and the second signal using the first antenna and the third antenna.

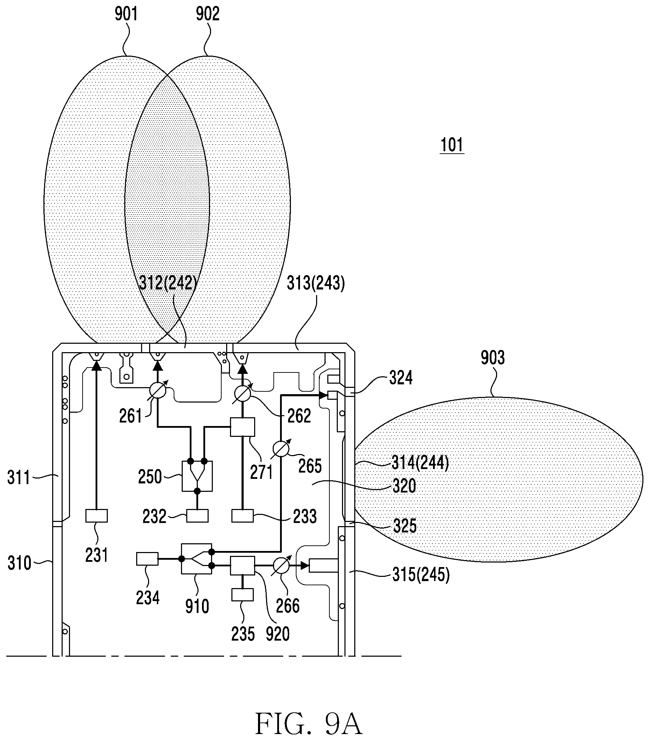

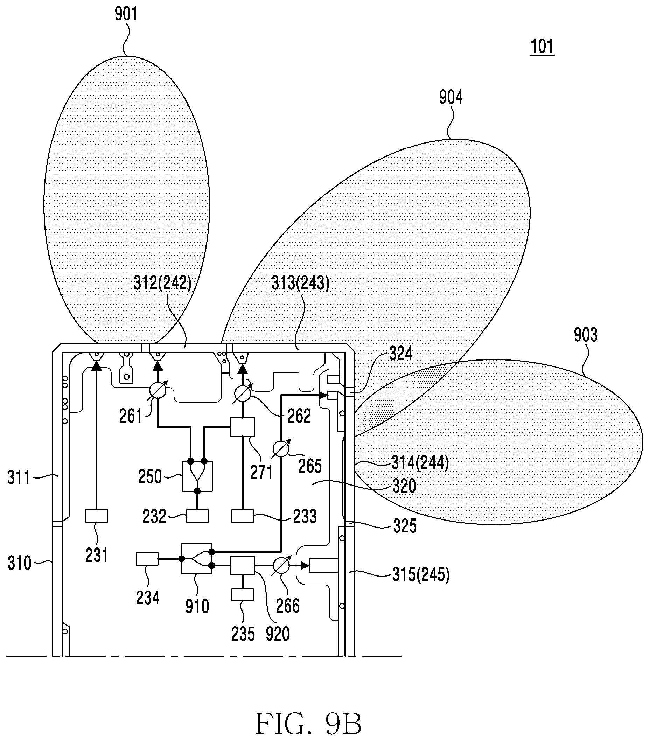

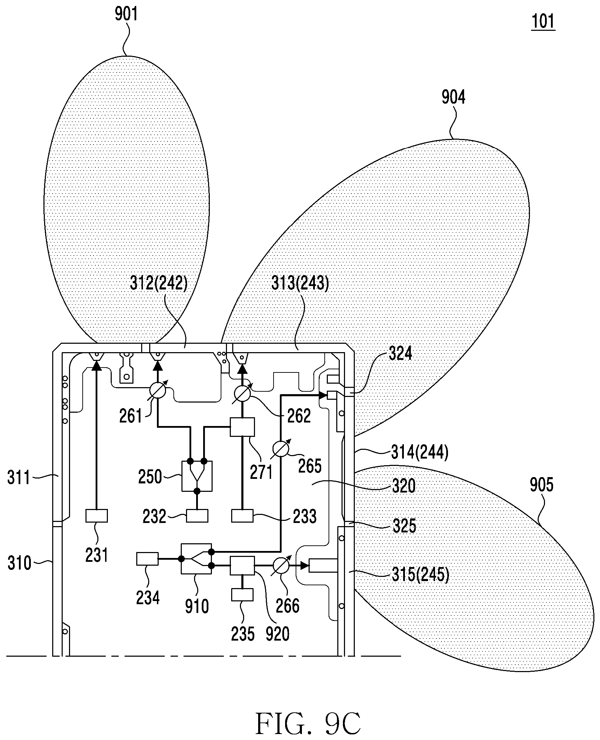

FIGS. 9A, 9B, and 9C are diagrams illustrating a process in which an electronic device according to an example embodiment controls directivity.

Referring to FIG. 9A, the example electronic device 101 may further include a fourth antenna radiator and a fifth antenna radiator. The fourth antenna radiator may be implemented by a fourth conductive portion 314. The fifth antenna radiator may be implemented by a fifth conductive portion 315. According to an example embodiment, the fourth conductive portion 314 may be disposed between a fourth non-conductive portion 324 and a fifth non-conductive portion 325. The fifth conductive portion 315 may contact the fifth non-conductive portion 325.

The electronic device 101 according to an example embodiment may further include fourth RFFE circuitry 234, fifth RFFE circuitry 235, another divider circuitry 910, a third phase shifter 265, a fourth phase shifter 266, and/or another diplexer 920. One of the third phase shifter 265 or the fourth phase shifter 266 may be omitted. The another divider circuitry 910 may be connected to each of the fourth antenna radiator and the fifth antenna radiator. The fourth RFFE circuitry 234 may be electrically connected to the fourth antenna radiator and the fifth antenna radiator via the another divider circuitry 910. The third phase shifter 265 may be disposed between the another divider circuitry 910 and the fourth antenna radiator. The fourth phase shifter 266 may be disposed between the another divider circuitry 910 and the fifth antenna radiator. The fifth RFFE circuitry 235 may be electrically connected to the fifth antenna radiator. The another diplexer 920 may be electrically connected with the fifth antenna radiator (e.g., the fifth conductive portion 315). In FIG. 9A, FIG. 9B, and FIG. 9C, the electronic device 101 is illustrated as including the another diplexer 920, but as described above, the another diplexer 920 may also be replaced with a first band pass filter or a second band pass filter. In FIG. 9A, FIG. 9B, and FIG. 9C, the electronic device 101 is illustrated as including the third phase shifter 265 and/or the fourth phase shifter 266, but as described above, the third phase shifter 265 and/or the fourth phase shifter 266 may also be replaced with matching circuitry.

According to an example embodiment, the fourth RFFE circuitry 234 may be configured to provide a signal on a fourth frequency band. The fourth RFFE circuitry 234 may be electrically connected to a fourth antenna radiator (e.g., the fourth conductive portion 314) and a fifth antenna radiator (e.g., the fifth conductive portion 315) via the another divider circuitry 910. In the following description, the fourth antenna radiator is described as the fourth conductive portion 314, and the fifth antenna radiator is described as the fifth conductive portion 315.

According to an example embodiment, the electronic device 101 may perform a MIMO operation using three antennas. Referring to FIG. 9A, in a case that the electronic device 101 performs the MIMO operation via the first conductive portion 311, the second conductive portion 312, and the fourth conductive portion 314, radiation patterns 901 and 902 in which peak directions are substantially identical or similar may be formed. When the first signal is transmitted and/or received via the first conductive portion 311, in a case that the second signal is transmitted and/or received via the second conductive portion 312 and the third conductive portion 313, a peak direction of the first radiation pattern 901 by the first signal and a peak direction of the second radiation pattern 902 by the second signal may be formed substantially identical or similar. In a case that the peak direction of the first radiation pattern 901 and the peak direction of the second radiation pattern 902 are formed substantially identical or similar, interference between the first signal and the second signal may occur, and communication performance of the electronic device 101 may be degraded. The fourth RFFE circuitry 234 may transmit and/or receive a fourth signal via the fourth conductive portion 314. In the case of the fourth conductive portion 314, since the fourth conductive portion 314 is disposed relatively farther from the first conductive portion 311 than the second conductive portion 312 and is substantially perpendicular to the first conductive portion 311, a third radiation pattern 903 by the fourth signal may be formed differently from the first radiation pattern 901 and the second radiation pattern 902.

Referring to FIG. 9B, the second signal provided from the second RFFE circuitry 232 may be transmitted to the second conductive portion 312 and the third conductive portion 313 via the divider circuitry 250. Due to a difference between a first phase of the second signal transmitted to the second conductive portion 312 and a second phase of the second signal transmitted to the third conductive portion 313, a peak direction of the fourth radiation pattern 904 may be different from the peak direction of the first radiation pattern 901. As the peak direction is controlled by the phase difference, interference between the first signal and the second signal may be reduced, but in a case that a peak direction of the third radiation pattern 903 and the peak direction of the fourth radiation pattern 904 are formed similarly, interference between the second signal and the fourth signal may occur.

Referring to FIG. 9C, the fourth signal provided from the fourth RFFE circuitry 234 may be provided to the fourth conductive portion 314 and the fifth conductive portion 315 via the another divider circuitry 910. A third phase of the fourth signal transmitted to the fourth conductive portion 314 and a fourth phase of the fourth signal transmitted to the fifth conductive portion 315 may be different by the third phase shifter 265 and/or the fourth phase shifter 266. A difference between the third phase and the fourth phase may control a peak direction of the fifth radiation pattern 905 according to the fourth signal. As illustrated in FIG. 9C, as the peak direction of the fifth radiation pattern 905 by the fourth signal and the peak direction of the fourth radiation pattern 904 are formed differently, interference between the second signal and the fourth signal may be reduced. As peak directions of the first radiation pattern 901, the fourth radiation pattern 904, and the fifth radiation pattern 905 are formed differently from each other, communication performance of the electronic device 101 performing the MIMO operation may be improved. According to an example embodiment, when the fifth conductive portion 315 is fed by the fifth RFFE circuitry 235, the fifth conductive portion 315 may operate as a separate antenna radiator (e.g., the fifth antenna radiator). The electronic device 101 may include another diplexer 920 for the fifth antenna radiator.

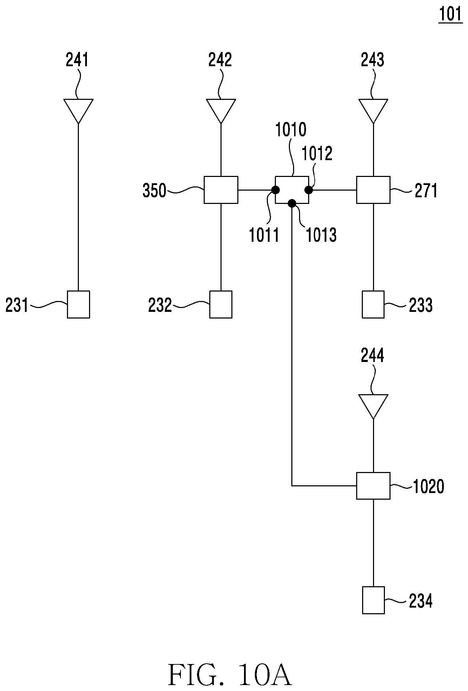

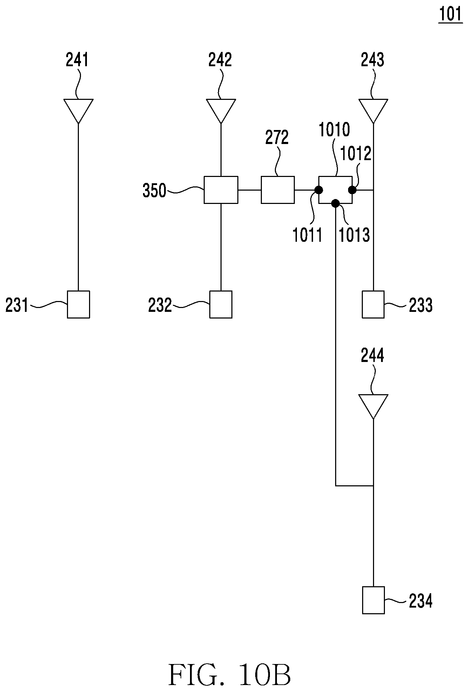

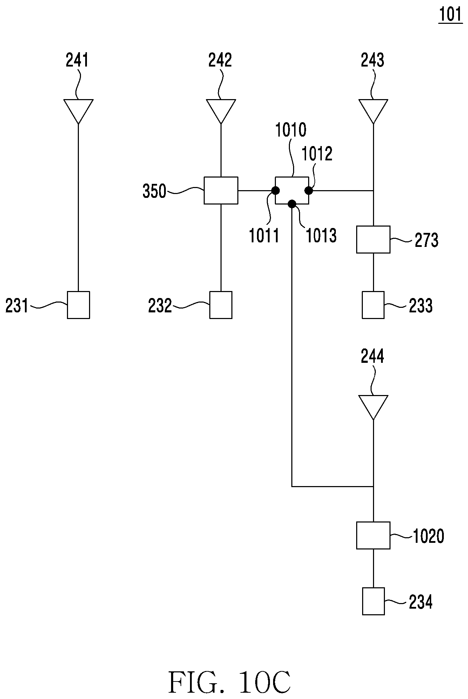

FIG. 10A, FIG. 10B, and FIG. 10C are block diagrams of an electronic device according to an example embodiment including a switch circuit.

As described above, the electronic device 101 may use a second antenna radiator (e.g., the second antenna radiator 242 of FIG. 2A) and a third antenna radiator (e.g., the third antenna radiator 243 of FIG. 2A) for a MIMO operation, together with a first antenna radiator (e.g., the first antenna radiator 241 of FIG. 2A). According to an example embodiment, the electronic device 101 may be configured to change an antenna radiator to be used together with the first antenna radiator 241 to perform the MIMO operation, by using an artificial intelligence model. For example, while transmitting and/or receiving the second signal using the second antenna radiator 242 and the third antenna radiator 243, the electronic device may transmit and/or receive the second signal using the second antenna radiator 242 and the fourth antenna radiator 244.

Referring to FIG. 10A, the electronic device 101 according to an example embodiment may further include a switch circuit 1010. The switch circuit 1010 may be disposed between divider circuitry (e.g., the divider circuitry 350 of FIG. 2A) and the fourth antenna radiator 244. For example, the switch circuit 1010 may include a first port 1011 connected to the divider circuitry 350, a second port 1012 connected to the third antenna radiator 243, and a third port 1013 connected to the fourth antenna radiator 244.

The embodiment illustrated in FIG. 10A may correspond to the embodiment illustrated in FIG. 2A. For example, in a case that the electronic device 101 includes a diplexer (e.g., the diplexer 271 of FIG. 2A), the switch circuit 1010 may be disposed between the divider circuitry 350 and the diplexer 271. The electronic device 101 may control the switch circuit 1010 to provide a state in which communication performance (e.g., a throughput) is high, by using an artificial intelligence model. For example, the switch circuit 1010 may be controlled to a first state in which the first port 1011 and the second port 1012 are connected, in order to transmit and/or receive the second signal using the second antenna radiator 242 and the third antenna radiator 243, while the first signal is transmitted and/or received via the first antenna radiator 241. For example, the switch circuit 1010 may be controlled to a second state in which the first port 1011 and the third port 1013 are connected, in order to transmit and/or receive the second signal using the second antenna radiator 242 and the fourth antenna radiator 244, while the first signal is transmitted and/or received via the first antenna radiator 241. The artificial intelligence model may determine, based on a use condition of the electronic device 101, a communication environment, or data throughput and the like, a state providing higher communication performance among the first state or the second state. The electronic device 101 may control the switch circuit 1010 based on a result determined using the artificial intelligence model. The electronic device 101 may further include filtering circuitry 1020 electrically connected to the fourth antenna radiator 243. For example, the filtering circuitry 1020 may include a diplexer configured to separate the second signal and the fourth signal.

The embodiment illustrated in FIG. 10B may correspond to the embodiment illustrated in FIG. 2B. For example, in a case that the electronic device 101 includes a first band pass filter (e.g., the first band pass filter 272 of FIG. 2B), the switch circuit 1010 may be disposed between the first band pass filter 272 and the third antenna radiator 243. The electronic device 101 may control the switch circuit 1010 to provide a state in which communication performance is high, by using the artificial intelligence model. For example, the switch circuit 1010 may be controlled to a first state in which the first port 1011 and the second port 1012 are connected, in order to transmit and/or receive the second signal using the second antenna radiator 242 and the third antenna radiator 243, while the first signal is transmitted and/or received via the first antenna radiator 241. For example, the switch circuit 1010 may be controlled to a second state in which the first port 1011 and the third port 1013 are connected, in order to transmit and/or receive the second signal using the second antenna radiator 242 and the fourth antenna radiator 244, while the first signal is transmitted and/or received via the first antenna radiator 241.

The embodiment illustrated in FIG. 10C may correspond to the embodiment illustrated in FIG. 2C. For example, in a case that the electronic device 101 includes a second band pass filter (e.g., the second band pass filter 273 of FIG. 2C), the switch circuit 1010 may be disposed between the divider circuitry 350 and the third antenna radiator 243. The electronic device 101 may control the switch circuit 1010 to provide a state in which communication performance is high, by using the artificial intelligence model. For example, the switch circuit 1010 may be controlled to a first state in which the first port 1011 and the second port 1012 are connected, in order to transmit and/or receive the second signal using the second antenna radiator 242 and the third antenna radiator 243, while the first signal is transmitted and/or received via the first antenna radiator 241. For example, the switch circuit 1010 may be controlled to a second state in which the first port 1011 and the third port 1013 are connected, in order to transmit and/or receive the second signal using the second antenna radiator 242 and the fourth antenna radiator 244, while the first signal is transmitted and/or received via the first antenna radiator 241. The electronic device 101 may further include filtering circuitry 1020 electrically connected to the fourth antenna radiator 243. For example, the filtering circuitry 1020 may include a band pass filter configured to pass the fourth signal.

An electronic device 101 is provided. The electronic device 101 may include at least one wireless communication circuit 192. The electronic device 101 may include divider circuitry 250 connected to the at least one wireless communication circuit. The electronic device 101 may include a plurality of antenna radiators 240. The plurality of antenna radiators 240 may include a first antenna radiator 241 to transmit a first signal on a first frequency band from the at least one wireless communication circuit 192, a second antenna radiator 242 to transmit a second signal on a second frequency band at least partially overlapping the first frequency band from the divider circuitry, and a third antenna radiator 243 to transmit the second signal on the second frequency band from the divider circuitry or a third signal on a third frequency band from the at least one wireless communication circuit 192. The electronic device 101 may include filtering circuitry 270 electrically connected to the third antenna radiator 243. The filtering circuitry 270 may be configured to transmit, to the third antenna radiator 243, the second signal on the second frequency band from the divider circuitry 250 or the third signal on the third frequency band from the at least one wireless communication circuit.

According to an example embodiment, the electronic device 101 may further include at least one of a first phase shifter 261 disposed between the second antenna radiator 242 and the divider circuitry 250 or a second phase shifter 262 disposed between the third antenna radiator 243 and the divider circuitry 250. The first phase shifter 261 or the second phase shifter 262 may be configured to cause a phase difference between a first phase of the second signal transmitted from the divider circuitry 250 to the second antenna radiator 242 and a second phase of the second signal transmitted from the divider circuitry 250 to the third antenna radiator 243.

According to an example embodiment, the electronic device 101 may further include a first transmission line P1 between the divider circuitry 250 and the second antenna radiator 242. The electronic device 101 may further include a second transmission line P2 between the divider circuitry 250 and the third antenna radiator 243. A first length of the first transmission line P1 may be different from a second length of the second transmission line P2 in order to cause a phase difference between a first phase of the second signal transmitted from the divider circuitry 250 to the second antenna radiator 242 and a second phase of the second signal transmitted from the divider circuitry 250 to the third antenna radiator 243.

According to an example embodiment, the electronic device 101 may further include a first transmission line P1 between the divider circuitry 250 and the second antenna radiator 242. The electronic device 101 may further include a second transmission line P2 between the divider circuitry 250 and the third antenna radiator 243. A width of the first transmission line P1 may be different from a width of the second transmission line P2 in order to cause a phase difference between a first phase of the second signal transmitted from the divider circuitry 250 to the second antenna radiator 242 and a second phase of the second signal transmitted from the divider circuitry 250 to the third antenna radiator 243.

According to an example embodiment, the electronic device 101 may further include at least one of first matching circuitry 263 disposed between the second antenna radiator 242 and the divider circuitry 250 and including at least one first passive element 263a and 263b including at least one of a capacitor or an inductor, or second matching circuitry 264 disposed between the third antenna radiator and the divider circuitry 250 and including at least one second passive element 264a and 264b including at least one of a capacitor or an inductor. The first matching circuitry 263 or the second matching circuitry 264 may be configured to cause a phase difference between a first phase of the second signal transmitted via the second antenna radiator 242 and a second phase of the second signal transmitted via the third antenna radiator 243.

According to an example embodiment, the first signal may be transmitted via the first antenna radiator 241. While the first signal is transmitted via the first antenna radiator 241, the second signal having a first phase may be transmitted via the second antenna radiator 242, and the second signal having a second phase different from the first phase may be transmitted via the third antenna radiator 243.

According to an example embodiment, the at least one wireless communication circuit 192 may include first RFFE circuitry 231 electrically connected to the first antenna radiator 241, second RFFE circuitry 232 electrically connected to the second antenna radiator 242 and the third antenna radiator 243 via the divider circuitry 250, and third RFFE circuitry 233 electrically connected to the third antenna radiator 243. The electronic device 101 may further include a first transmission line P1 between the divider circuitry 250 and the second antenna radiator 242. The electronic device 101 may further include a second transmission line P2 between the divider circuitry 250 and the third antenna radiator 243. The electronic device 101 may further include a third transmission line P3 extended from the third RFFE circuitry 233 and connected to the second transmission line P2. The filtering circuitry 270 may include a diplexer 271 disposed at a point at which the second transmission line P2 and the third transmission line P2 are connected to each other. The diplexer 271 may be configured to transmit, to the third antenna radiator 243, the second signal from the divider circuitry 250. The diplexer 271 may be configured to transmit, to the divider circuitry 250, the second signal from the third antenna radiator 243. The diplexer 271 may be configured to transmit, to the third antenna radiator 243, the third signal from the third RFFE circuitry 233. The diplexer 271 may be configured to transmit, to the third RFFE circuitry 233, the third signal from the third antenna radiator 243.

According to an example embodiment, the at least one wireless communication circuit 192 may include first RFFE circuitry 231 electrically connected to the first antenna radiator 241, second RFFE circuitry 232 electrically connected to the second antenna radiator 242 and the third antenna radiator 243 via the divider circuitry 250, and third RFFE circuitry 233 electrically connected to the third antenna radiator 243. The electronic device 101 may further include a first transmission line P1 between the divider circuitry 250 and the second antenna radiator 242. The electronic device 101 may further include a second transmission line P2 between the divider circuitry 250 and the third antenna radiator 243. The electronic device 101 may further include a third transmission line P3 extended from the third RFFE circuitry 233 and connected to the second transmission line P2. The filtering circuitry 270 may include a first band pass filter 272, disposed on the second transmission line P2 between the divider circuitry 250 and a point at which the second transmission line P2 and the third transmission line P3 are connected to each other, configured to pass signals on the second frequency band.

According to an example embodiment, the at least one wireless communication circuit 192 may include first RFFE circuitry 231 electrically connected to the first antenna radiator 241, second RFFE circuitry 232 electrically connected to the second antenna radiator 242 and the third antenna radiator 243 via the divider circuitry 250, and third RFFE circuitry 233 electrically connected to the third antenna radiator 243. The electronic device 101 may further include a first transmission line P1 between the divider circuitry 250 and the second antenna radiator 242. The electronic device 101 may further include a second transmission line P2 between the divider circuitry 250 and the third antenna radiator 243. The electronic device 101 may further include a third transmission line P3 extended from the third RFFE circuitry 233 and connected to the second transmission line P2. The filtering circuitry 270 may include a second band pass filter 272 disposed on the third transmission line P3 and configured to pass signals on the third frequency band.

According to an example embodiment, when transmitting the first signal, a first radiation pattern from the first antenna radiator 241 may be formed. When transmitting the second signal, a second radiation pattern from the second antenna radiator 242 and the third antenna radiator 243 may be formed. A first envelope correlation coefficient (ECC) between the first radiation pattern and the second radiation pattern may be lower than a second ECC between the first radiation pattern and a third radiation pattern formed from the second antenna radiator 242, when transmitting the second signal.

According to an example embodiment, a throughput by the first radiation pattern and the second radiation pattern may be higher than a second throughput by the first radiation pattern and the third radiation pattern.

According to an example embodiment, when transmitting the first signal, a peak of a first radiation pattern formed from the first antenna radiator 241 may be directed toward a first direction. When transmitting the second signal, a peak of a second radiation pattern formed from the second antenna radiator 242 and the third antenna radiator 243 may be directed toward a second direction different from the first direction.

According to an example embodiment, the electronic device 101 may further include a grip sensor 290 disposed adjacent to the plurality of antenna radiators 240. The second direction, toward which a peak of the second radiation pattern formed from the second antenna radiator 242 and the third antenna radiator 243 is directed, may be determined based on a sensing result of the grip sensor.

According to an example embodiment, the plurality of antenna radiators 240 may further include a fourth antenna radiator 244. The electronic device 101 may further include a switch circuit 1010 disposed between the divider circuitry 250 and the fourth antenna radiator 244. The switch circuit 1010 may be configured to selectively connect the divider circuitry 250 to the third antenna radiator 243 or the fourth antenna radiator 244.

According to an example embodiment, the switch circuit 1010 may be configured to connect the divider circuitry 250 to the third antenna radiator 243 or connect the divider circuitry 250 to the fourth antenna radiator 244, based on a result analyzed by artificial intelligence.

According to an example embodiment, the plurality of antenna radiators 240 may further include a fourth antenna radiator 244 to transmit a fourth signal on a fourth frequency band from the divider circuitry 250, and a fifth antenna radiator 245 to transmit the fourth signal from the divider circuitry 250 or a fifth signal on a fifth frequency band from the at least one wireless communication circuit 192. The electronic device 101 may further include other divider circuitry 910 electrically connecting the at least one wireless communication circuit 192 to the fourth antenna radiator and the fifth antenna radiator. The electronic device 101 may further include other filtering circuitry 920 electrically connected to the fifth antenna radiator. The other filtering circuitry 920 may be configured to transmit, to the fifth antenna radiator 245, the fourth signal on the fourth frequency band from the other divider circuitry 910 or the fifth signal on the fifth frequency band from the at least one wireless communication circuit 192.

According to an example embodiment, the electronic device 101 may further include at least one of a third phase shifter 265 disposed between the other divider circuitry 910 and the fourth antenna radiator 244 or a fourth phase shifter 266 disposed between the other divider circuitry 910 and the fifth antenna radiator 245. The third phase shifter 265 or the fourth phase shifter 266 may be configured to cause a difference between a third phase of the fourth signal transmitted from the other divider circuitry 910 to the fourth antenna radiator 244 and a fourth phase of the fourth signal transmitted from the other divider circuitry 910 to the fifth antenna radiator 245.

According to an example embodiment, the electronic device 101 may further include a housing 301 including a peripheral part 310 defining a side exterior surface of the electronic device 101 and including a first conductive portion 311, a second conductive portion 312, and a third conductive portion 313. At least a portion of the first conductive portion 311 may be operated as at least a portion of the first antenna radiator 241. At least a portion of the second conductive portion 312 may be operated as at least a portion of the second antenna radiator 242. At least a portion of the third conductive portion 313 may be operated as at least a portion of the third antenna radiator 243.

According to an example embodiment, the second conductive portion 312 may be disposed between at least a portion of the first conductive portion 311 and at least a portion of the third conductive portion 313.

According to an example embodiment, the peripheral part 310 may include a first non-conductive portion 321 formed between the first conductive portion 311 and the second conductive portion 312. The peripheral part 310 may include a second non-conductive portion 322 formed between the second conductive portion 312 and the third conductive portion 313.

An electronic device 101 is provided. The electronic device 101 may include at least one processor 210 including processing circuitry. The electronic device 101 may include memory 280 including one or more storage mediums storing instructions. The electronic device 101 may include a first antenna radiator 241. The electronic device 101 may include a second antenna radiator 242. The electronic device 101 may include a third antenna radiator 243. The electronic device 101 may include divider circuitry 250 connected to each of the second antenna radiator 242 and the third antenna radiator 243. The electronic device 101 may include first radio frequency front end (RFFE) circuitry 231 electrically connected to the first antenna radiator 241. The electronic device 101 may include second RFFE circuitry 232 electrically connected to the second antenna radiator 242 and the third antenna radiator 243 via the divider circuitry 250. The electronic device 101 may include third RFFE circuitry 233 electrically connected to the third antenna radiator 243. The electronic device 101 may include a first phase shifter 261 disposed between the second RFFE circuitry 232 and the third antenna radiator 243. The instructions, when executed by the at least one processor 210 individually or collectively, may cause the electronic device 101 to transmit or receive a first signal via the first RFFE circuitry 231 and the first antenna radiator 241. The instructions, when executed by the at least one processor 210 individually or collectively, may cause the electronic device 101 to, while the first signal is transmitted or received, transmit or receive a second signal having a first phase via the second RFFE circuitry 232, the divider circuitry 250, and the second antenna radiator 242, and transmit or receive a third signal via the second RFFE circuitry 232, the divider circuitry 250, the first phase shifter 261, and the third antenna radiator 243. The third signal may have a second phase shifted from the first phase by the first phase shifter 261 to control directivity according to the second signal and the third signal.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
at least one wireless communication circuit;
divider circuitry connected to the at least one wireless communication circuit;
a plurality of antenna radiators including:
a first antenna radiator to transmit a first signal on a first frequency band from the at least one wireless communication circuit,
a second antenna radiator to transmit a second signal on a second frequency band at least partially overlapping the first frequency band from the divider circuitry, and
a third antenna radiator to transmit the second signal on the second frequency band from the divider circuitry or a third signal on a third frequency band from the at least one wireless communication circuit; and
filtering circuitry electrically connected to the third antenna radiator,
wherein the filtering circuitry is configured to transmit, to the third antenna radiator, the second signal on the second frequency band from the divider circuitry, or the third signal on the third frequency band from the at least one wireless communication circuit.

2. The electronic device of claim 1, further comprising at least one of a first phase shifter disposed between the second antenna radiator and the divider circuitry, or a second phase shifter disposed between the third antenna radiator and the divider circuitry,
wherein the first phase shifter or the second phase shifter is configured to cause a difference between a first phase of the second signal transmitted from the divider circuitry to the second antenna radiator and a second phase of the second signal transmitted from the divider circuitry to the third antenna radiator.

3. The electronic device of claim 1 or 2, further comprising:
a first transmission line between the divider circuitry and the second antenna radiator; and
a second transmission line between the divider circuitry and the third antenna radiator,
wherein a first length of the first transmission line is different from a second length of the second transmission line, to cause a difference between a first phase of the second signal transmitted from the divider circuitry to the second antenna radiator and a second phase of the second signal transmitted from the divider circuitry to the third antenna radiator.

4. The electronic device of any one of claim 1 to 3, further comprising:
a first transmission line between the divider circuitry and the second antenna radiator; and
a second transmission line between the divider circuitry and the third antenna radiator,
wherein a first width of the first transmission line is different from a second width of the second transmission line, to cause a difference between a first phase of the second signal transmitted from the divider circuitry to the second antenna radiator and a second phase of the second signal transmitted from the divider circuitry to the third antenna radiator.

5. The electronic device of any one of claim 1 to 4, further comprising at least one of:
first matching circuitry disposed between the second antenna radiator and the divider circuitry and including at least one first passive element comprising at least one of a capacitor or an inductor, or
second matching circuitry disposed between the third antenna radiator and the divider circuitry and including at least one second passive element comprising at least one of a capacitor or an inductor,
wherein the first matching circuitry or the second matching circuitry is configured to cause a difference between a first phase of the second signal transmitted via the second antenna radiator and a second phase of the second signal transmitted via the third antenna radiator.

6. The electronic device of any one of claim 1 to 5,
wherein the first signal is transmitted via the first antenna radiator, and
wherein, while the first signal is transmitted via the first antenna radiator, the second signal having a first phase is transmitted via the second antenna radiator and the second signal having a second phase different from the first phase is transmitted via the third antenna radiator.

7. The electronic device of any one of claim 1 to 6,
wherein the at least one wireless communication circuit includes:
first radio frequency front end, RFFE, circuitry electrically connected to the first antenna radiator,
second RFFE circuitry electrically connected to the second antenna radiator and the third antenna radiator, via the divider circuitry, and
third RFFE circuitry electrically connected to the third antenna radiator,
wherein the electronic device further comprises:
a first transmission line between the divider circuitry and the second antenna radiator;
a second transmission line between the divider circuitry and the third antenna radiator; and
a third transmission line, extended from the third RFFE circuitry, connected to the second transmission line,
wherein the filtering circuitry comprises a diplexer disposed at a point where the second transmission line and the third transmission line are connected to each other, and
wherein the diplexer is configured to:
transmit the second signal from the divider circuitry to the third antenna radiator,
transmit the second signal from the third antenna radiator to the divider circuitry,
transmit the third signal from the third RFFE circuitry to the third antenna radiator, and
transmit the third signal from the third antenna radiator to the third RFFE circuitry.

8. The electronic device of any one of claim 1 to 7,
wherein the at least one wireless communication circuit includes:
first RFFE circuitry electrically connected to the first antenna radiator,
second RFFE circuitry electrically connected to the second antenna radiator and the third antenna radiator, via the divider circuitry, and
third RFFE circuitry electrically connected to the third antenna radiator,
wherein the electronic device further comprises:
a first transmission line between the divider circuitry and the second antenna radiator;
a second transmission line between the divider circuitry and the third antenna radiator; and
a third transmission line, extended from the third RFFE circuitry, connected to the second transmission line,
wherein the filtering circuitry comprises a first band pass filter disposed on a portion of the second transmission line between the divider circuitry and a point at which the second transmission line and the third transmission line are connected to each other, the first band pass filter configured to pass signals on the second frequency band.

9. The electronic device of any one of claim 1 to 8,
wherein the at least one wireless communication circuit includes:
first RFFE circuitry electrically connected to the first antenna radiator,
second RFFE circuitry electrically connected to the second antenna radiator and the third antenna radiator, via the divider circuitry, and
third RFFE circuitry electrically connected to the third antenna radiator,
wherein the electronic device further comprises:
a first transmission line between the divider circuitry and the second antenna radiator;
a second transmission line between the divider circuitry and the third antenna radiator; and
a third transmission line, extended from the third RFFE circuitry, connected to the second transmission line,
wherein the filtering circuitry comprises a second band pass filter disposed on the third transmission line and configured to pass signals on the third frequency band.

10. The electronic device of any one of claim 1 to 9,
wherein a first radiation pattern is formed from the first antenna radiator, when transmitting the first signal,
wherein a second radiation pattern is formed from the second antenna radiator and the third antenna radiator, when transmitting the second signal, and
wherein a first envelope correlation coefficient, ECC, between the first radiation pattern and the second radiation pattern is lower than a second ECC between the first radiation pattern and a third radiation pattern formed from the second antenna radiator, when transmitting the second signal.

11. The electronic device of claim 10,
wherein a throughput by the first radiation pattern and the second radiation pattern is higher than a second throughput by the first radiation pattern and the third radiation pattern.

12. The electronic device of any one of claim 1 to 11,
wherein, when transmitting the first signal, a peak of a first radiation pattern, formed from the first antenna radiator, is directed toward a first direction, and
wherein, when transmitting the second signal, a peak of a second radiation pattern, formed from the second antenna radiator and the third antenna radiator, is directed toward a second direction different from the first direction.

13. The electronic device of any one of claim 1 to 12, further comprising a grip sensor disposed adjacent the plurality of antenna radiators,
wherein a second direction, toward which a peak of a second radiation pattern formed from the second antenna radiator and the third antenna radiator is directed, is determined based on a sensing result of the grip sensor.

14. The electronic device of any one of claim 1 to 13,
wherein the plurality of antenna radiators further comprises a fourth antenna radiator,
wherein the electronic device further comprises a switch circuit disposed between the divider circuitry and the fourth antenna radiator, and
wherein the switch circuit is configured to selectively connect the divider circuitry to the third antenna radiator or the fourth antenna radiator.

15. The electronic device of claim 14,
wherein the switch circuit is configured to connect the divider circuitry to the third antenna radiator, or connect the divider circuitry to the fourth antenna radiator, based on results analyzed by artificial intelligence.
